# EUROPEAN PATENT SPECIFICATION

(11) **EP 2 484 729 B1**
(45) Date of publication and mention of the grant of the patent: **01.02.2017**
(21) Application number: 12153617.1
(22) Date of filing: 02.02.2012
(51) Int. Cl.: C09D 11/101, C09D 11/40, C09D 11/322

(54) **Inkjet ink composition, ink set, inkjet recording method, and printed material**
Tintenstrahltintenzusammensetzung, Tintensatz, Tintenstrahlaufzeichnungsverfahren und gedrucktes Material
Composition d'encre pour jet d'encre, assortiment d'encre, procédé d'enregistrement à jet d'encre et matériau imprimé

(30) Priority: 03.02.2011 JP 2011021913; 22.06.2011 JP 2011138472
(43) Date of publication of application: 08.08.2012
(73) Proprietor: Fujifilm Corporation, Minato-ku Tokyo (JP)
(72) Inventor: Hayata, Yuuichi, Kanagawa (JP); Oshima, Yasuhito, Kanagawa (JP); Fujii, Yuusuke, Kanagawa (JP)
(74) Representative: Hoffmann Eitle

(56) References cited:
- EP-A1- 1 970 417
- EP-A1- 2 412 765
- EP-A2- 2 412 768
- WO-A1-2009/045703
- US-A1- 2008 225 099

## Description

The present invention relates to an inkjet ink composition, an ink set, an inkjet recording method and a printed material.

As image recording methods for forming an image on a recording medium such as paper based on an image data signal, there are an electrophotographic system, sublimation type and melt type thermal, transfer systems, an inkjet system, etc.

With regard to the inkjet system, the printing equipment is inexpensive, it is not necessary to use a plate when printing, and since an image is formed directly on a recording medium by discharging an ink composition only on a required image area, the ink composition can be used efficiently and the running cost is low, particularly in the case of small lot production. Furthermore, there is little noise and it is excellent as an image recording system, and has been attracting attention in recent years.

Among them, an inkjet recording ink composition (radiation-curing inkjet recording ink composition), which is curable upon exposure to radiation such as UV rays, is an excellent system from the viewpoint of it being possible to print on various types of recording media because, compared with a solvent-based ink composition, the drying properties are excellent and an image is resistant to spreading since the majority of the components in the ink composition cure upon exposure to radiation such as UV rays. Examples of a conventional ink composition for inkjet recording are described in JP-A-2009-67963 (JP-A denotes a Japanese unexamined patent application publication), Published Japanese translation of PCT application No. 2009-534514, International Patent Application WO 2009/045703.

EP-A-1 970 417 and US-A-2008/0225099 both disclose a dilution formulation for an ink comprising *inter alia* a modified polyetherpolyol acrylate, cyclic trimethylolpropane formal acrylate, 2-(2-ethoxyethoxy)ethyl acrylate, n-vinyl caprolactam, dipropylene glycol diacrylate and phenyl bis(2,4,6-trimethylbenzoyl)-phosphine oxide.

EP-A-2 412 765, prior art pursuant to Article 54(3) EPC, discloses an inkjet recording method comprising:
an image formation step of forming an image on a recording medium by discharging an ink composition comprising
   (Component A) and (Component B)
   (Component A) a polymerizable composition comprising
   Component A-1 to Component A-3
   (Component A-1) an N-vinyllactam,
   (Component A-2) a compound represented by Formula (a-2) 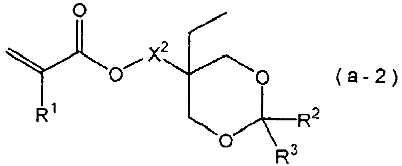
wherein in Formula (a-2), R¹, R², and R³ independently denote a hydrogen atom, a methyl group, or an ethyl group, and X² denotes a single bond or a divalent linking group, (Component A-3) a polyfunctional (meth)acrylate,
the total content of monofunctional polymerizable compounds comprising Component A-1 and Component A-2 being at least 40 wt% in the ink composition,
(Component B) a polymerization initiator comprising Component B-1 and Component B-2
(Component B-1) an acylphosphine compound,
(Component B-2) a thioxanthone compound and/or a thiochromanone compound,
{(Component B-1 total weight) >= (Component B-2 total weight)} being satisfied; and
a curing step of curing the discharged ink composition by irradiating with UV using a light-emitting diode that emits UV having an emission peak wavelength in the range of 300 to 400 nm so that the maximum illumination intensity on the recording medium surface is 600 to 1,600 mW/cm².

EP-A-2 412 768, prior art pursuant to Article 54(3) EPC, discloses an inkjet ink composition comprising:
(Component 1-A) an N-vinyllactam;
(Component 1-B) a compound represented by Formula (1); and
(Component 1-C) at least one compound selected from the group consisting of a bisacylphosphine compound, a thioxanthone compound, a thiochromanone compound, and an [alpha]-aminoketone compound;
the inkjet ink composition either not comprising a silicone-based surfactant or a fluorine-based surfactant or comprising a silicone-based surfactant and a fluorine-based surfactant at a total content of greater than 0 wt% but no greater than 0.03 wt% relative to the entire weight of the inkjet ink composition, 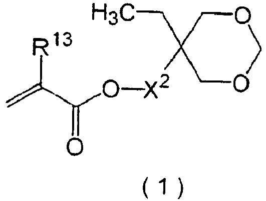 wherein R¹³ denotes a hydrogen atom or a methyl group, and X² denotes a single bond or a divalent linking group.

It is an object of the present invention to provide an inkjet ink composition having high surface gross, high image density, little feeling of grain due to image aggregation of a low density image, excellent substrate adhesion to polypropylene, etc., and excellent antiblocking properties, an ink set comprising the inkjet ink composition, and an inkjet recording method and printed material employing the inkjet ink composition.

According to a first aspect, the present invention provides an inkjet ink composition comprising:
(Component A) a radically polymerizable monomer comprising at least Components A-1 to A-4;
(Component A-1) an N-vinyllactam,
(Component A-2) a compound represented by Formula (1),
(Component A-3) a compound represented by Formula (2), and
(Component A-4) a difunctional (meth)acrylate compound and a trifunctional (meth)acrylate compound; and
as (Component B) a polymerization initiator, (Component B-1) a bisacylphosphine compound
the total content of Components A-1 to A-3 being 65 to 90 wt%,
the content of Component A-4 being 1 to 9 wt%, and
the surface tension at 25°C being 34.0 to 40.0 mN/m, 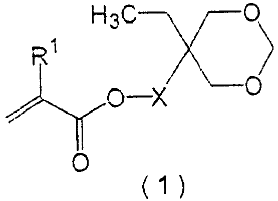 wherein R¹ denotes a hydrogen atom or a methyl group and X denotes a single bond or a divalent linking group having 1 to 60 carbons, 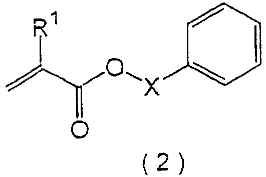 wherein R¹ denotes a hydrogen atom or a methyl group and X denotes a single bond, an alkylene group having 2 to 10 carbons, or a divalent linking group formed by combining one or more alkylene groups having 2 to 10 carbons and one or more bonds selected from the group consisting of an ether bond, an ester bond, a urethane bond, and a urea bond.

Preferably the inkjet ink composition does not comprise a silicone-based surfactant or a fluorine-based surfactant, or the total content of such surfactants is less than 0.01 wt% relative the total weight of the inkjet ink composition.

Preferably the difunctional (meth)acrylate compound is an optionally branched hydrocarbon chain having 5 or more carbons.

Preferably the composition comprises as Component A-3 a radically polymerizable monomer represented by Formula (2) and a radically polymerizable monomer represented by the following Formula (3): 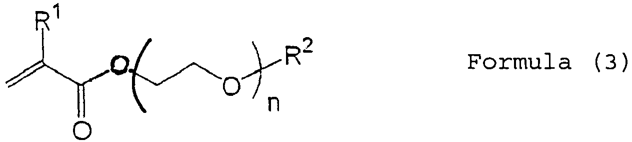 wherein R¹ denotes a hydrogen atom or a methyl group, R² denotes an alkyl group having 2 to 4 carbons, and n denotes an integer of 1 to 3.

Preferably the polymerization initiator (Component B) further comprises a thioxanthone compound (Component B-2).

Preferably the total content of the Component B-1 and the Component B-2 is 2.5 to 10 wt% relative to the total weight of the inkjet ink composition.

Preferably Component A-1 is N-vinylcaprolactam and Component A-2 is cyclic trimethylolpropane formal acrylate.

Preferably Component A-3 is phenoxyethyl acrylate and 2-ethoxyethoxyethyl acrylate and Component A-4 is 3-methylpentanediol diacrylate and trimethylolpropane triacrylate.

Preferably the inkjet ink composition has a surface tension in the range of 36.0 to 39.5 mN/m.

Preferably the difunctional (meth)acrylate compound is neopentyl glycol di(meth)acrylate, propylene oxide-modified neopentyl glycol di(meth)acrylate, hexanediol di(meth)acrylate, propylene oxide-modified hexanediol di(meth)acrylate, nonanediol di(meth)acrylate, decanediol di(meth)acrylate, dodecanediol di(meth)acrylate, tridecanediol di(meth)acrylate, octadecanediol di(meth)acrylate, 3-methyl-1,5-pentanediol di(meth)acrylate, " 2-n-butyl-2-ethyl-1,3-propanediol di(meth)acrylate, cyclohexanedimethanol di(meth)acrylate or cyclohexane di(meth)acrylate.

Preferably the trifunctional (meth)acrylate compound is pentaerythritol tri(meth)acrylate, trimethylolethane tri(meth)acrylate or trimethylolpropane tri(meth)acrylate.

According to a second aspect, the present invention provides an ink set comprising: at least a cyan ink composition, a magenta ink composition, a yellow ink composition, and a black ink composition, at least one of the cyan ink composition, the magenta ink composition, the yellow ink composition, and the black ink composition being the inkjet ink composition according to the above first aspect, the cyan ink composition comprising a phthalocyanine pigment, the magenta ink composition comprising C.I. Pigment Violet 19, C.I. Pigment Violet 122, or a mixed crystal pigment of C.I. Pigment Violet 19, the yellow ink composition comprising C.I. Pigment Yellow 150, C.I. Pigment Yellow 155, or C.I. Pigment Yellow 180, and the black ink composition comprising a carbon black pigment.

Preferably the magenta ink composition comprises a mixed crystal pigment of C.I. Pigment Violet 19 and the yellow ink composition comprises C.I. Pigment Yellow 150, C.I. Pigment Yellow 155, or C.I. Pigment Yellow 180.

According to a third aspect, the present invention provides an inkjet recording method comprising the steps of:
discharging the inkjet ink composition according to the above first aspect onto a recording medium; and
curing the inkjet ink composition by irradiating the discharged inkjet ink composition with actinic radiation.

According to a fourth aspect, the present invention provides printed material formed using the inkjet recording method according to the above third aspect.
in accordance with the present invention, there can be provided an inkjet ink composition having high surface gloss, high image density, little feeling of grain due to image aggregation of a low density image, excellent substrate adhesion to polypropylene, etc., and excellent antiblocking properties, an ink set comprising the inkjet ink composition, and an inkjet recording method and printed material employing the inkjet ink composition.

The present invention is explained in detail below.

### Inkiet ink composition

The inkjet ink composition of the present invention (hereinafter, also simply called an 'ink composition') comprises (Component A) a radically polymerizable monomer comprising at least Components A-1 to A-4 and, as (Component B) a polymerization initiator, Component B-1, the total content of Components A-1 to A-3 being 65 to 90 wt%, the content of Component A-4 being 1 to 9 wt%, and the surface tension at 25°C being 34.0 to 40.0 mN/m.
(Component A-1) an *N*-vinyllactam
(Component A-2) a compound represented by Formula (1)
(Component A-3) a compound represented by Formula (2) and optionally a compound represented by formula (3)
(Component A-4) a di- and a tri-functional(meth)acrylate compound
(Component B-1) a bisacylphosphine compound 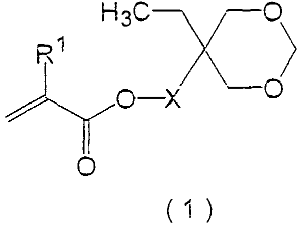
(in Formula (1), R¹ denotes a hydrogen atom or a methyl group, and X denotes a single bond or a divalent linking group.) 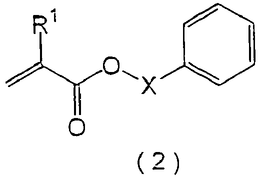 (in Formula (2), R¹ denotes a hydrogen atom or a methyl group and X denotes a single bond or a divalent linkinl group.) 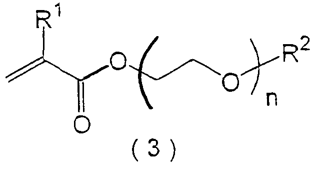 (in Formula (3), R¹ denotes a hydrogen atom or a methyl group, R² denotes a alkyl group and n denotes an integer of 1 to 3.)

In the present specification, 'A to B', which expresses a numerical range, has the same meaning as 'at least A but no greater than B'. Furthermore, '(Component A-1) an *N*-vinyltactam' is also called simply 'Component A-1'.

The ink composition of the present invention is an oil-based ink composition that is curable upon exposure to actinic radiation.

The 'actinic radiation' referred to in the present invention is radiation that can provide energy that enables an initiating species to be generated in the ink composition when irradiated, includes α rays, γ rays, X rays, ultraviolet rays, visible light, and an electron beam. Among these, ultraviolet rays and an electron beam are preferable from the viewpoint of curing sensitivity and the availability of equipment, and ultraviolet rays are more preferable.

Constituent components and values of physical properties of the ink composition of the present invention are explained below.

### Surface tension of ink composition

The ink composition of the present invention has a surface tension at 25°C of 34.0 to 40.0 mN/m, preferably 35.0 to 39.5 mN/m, more preferably 36.0 to 39.5 mN/m, and particularly preferably 36.5 to 39.0 mN/m.

When the surface tension at 25°C is less than 34.0 mN/m or exceeds 40.0 mN/m, an image having excellent surface gloss cannot be obtained, and sufficient image density cannot be obtained.

When the surface tension at 25°C is 34.0 to 40.0 mN/m, an image having excellent surface gloss and high image density can be obtained. It is surmised that when the surface tension at 25"C is no greater than 40.0 mN/m, spreading on a support while wet is promoted, and when it is at least 34.0 mN/m, spreading while wet of a fired droplet overprinted on a previously fired droplet in multipass drawing in particular is promotes. Furthermore, when it is at least 34.0 mN/m, interaction with a support is strong and substrate adhesion is excellent.

With regard to a method for measuring the surface tension of the ink composition, a method in which measurement is carried out by a ring method using a normal surface tensiometer (e.g. a SIGMA 702 surface tensiometer, KSV INSTRUMENTS LTD, etc.), at a liquid temperature of 25°C can be cited as an example.

The ink composition of the present invention comprises (Component A) a radically polymerizable monomer. It comprises as Component A at least Components A-1 to A-4, which are explained below, the total content of Components A-1 to A-3 being 65 to 90 wt% of the total weight of the ink composition and the content of Component A-4 being 1 to 9 wt% of the total weight of the ink composition. A-1 to A-4 are explained below.

### (Component A-1) N-vinyllactam

The ink composition of the present invention comprises (Component A-1) *N-*vinyllactam. Component A-1 is preferably a compound represented by Formula (a).

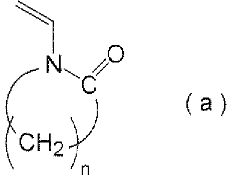

In Formula (a), n denotes an integer of 2 to 6; n is preferably an integer of 3 to 5 from the viewpoint of flexibility after the ink composition is cured, adhesion to a recording medium, and ready availability of starting materials, n is more preferably 3 or 5, and n is particularly preferably 5, which is *N*-vinylcaprolactam. *N-*vinylcaprolactam is preferable since it has excellent safety, is commonly used and is readily available at a relatively low price, and gives particularly good ink curability and adhesion of a cured film to a recording medium.

The *N*-vinyllactam may have a substituent such as an alkyl group or an aryl group on the lactam ring, and may have a saturated or unsaturated ring structure bonded to the lactam ring.

Component A-1 may be used singly or in a combination of two or more compounds.

The content of Component A-1 is preferably 7 to 45 wt% relative to the total weight of the ink composition, more preferably 15 to 40 wt%, and yet more preferably 20 to 38 wt%. When in the above-mentioned range, a curing profile is promoted in which, while strongly promoting the curability of the interior of a printed material the outermost surface alone of a cured film is selectively maintained in a liquid state for a long period of time, and an image having high surface gloss, high image density, and little feeling of grain for a low density image can be obtained. Furthermore, an ink composition having excellent substrate adhesion to polyvinyl chloride and polypropylene in particular can be obtained.

### (Component A-2) Compound represented by Formula (1)

The ink composition of the present invention comprises (Component A-2) a compound represented by Formula (1). 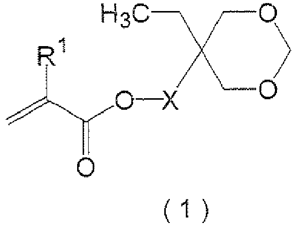 (In Formula (1), R¹ denotes a hydrogen atom or a methyl group, and X denotes a single bond or a divalent linking group.)

The compound represented by Formula (1) may be an acrylate compound or a methacrylate compound, but is preferably an acrylate compound, that is, R¹ is a hydrogen atom.

The divalent linking group denoted by X in Formula (1) is not particularly limited as long as the effects of the present invention are not greatly impaired; it is preferably a divalent hydrocarbon group or a divalent group in which a hydrocarbon group and an ether bond are combined, and is more preferably a divalent hydrocarbon group, a poly(alkyleneoxy) group, or a poly(alkyleneoxy)alkyl group. Furthermore, the number of carbons of the divalent linking group is preferably 1 to 60, and more preferably 1 to 20.

X in Formula (1) is preferably a single bond, a divalent hydrocarbon group, or a divalent group in which a hydrocarbon group and an ether bond are combined, more preferably a divalent hydrocarbon group having 1 to 20 carbons, yet more preferably a divalent hydrocarbon group having 1 to 8 carbons, and particularly preferably a methylene group.

Specific preferred examples of compounds represented by Formula (1) include, but of course are not limited to compounds (A-2-1) to (A-2-4) shown below.

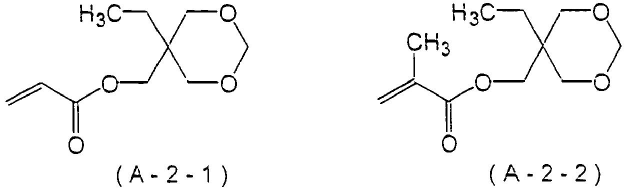

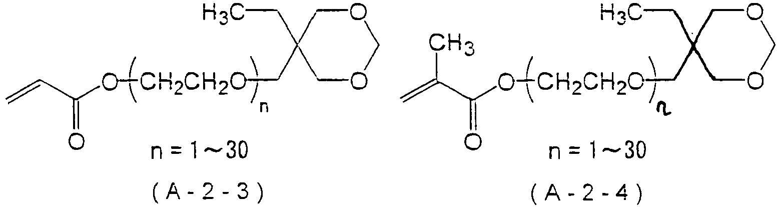

Among them, cyclic trimethylolpropane formal acrylate (A-2-1) and cyclic trimethylolpropane formal methacrylate (A-2-2) are preferable, and cyclic trimethylolpropane formal acrylate (A-2-1) is particularly preferable.

The content of the compound represented by Formula (1) in the ink composition of the present invention is preferably 15 to 60 wt% relative to the total weight of the ink composition, more preferably 20 to 55 wt%, and particularly preferably 25 to 50 wt%. When in the above-mentioned range, an image having high surface gloss, high color saturation, and little feeling of grain for a low density image can be obtained. Furthermore, an ink composition having excellent substrate adhesion to polyvinyl chloride and polypropylene can be obtained.

### (Component A-3) Compound represented by Formula (2) and optionally Formula (3)

The ink composition of the present invention comprises a compound represented by Formula (2) and optionally additionally Formula (3). 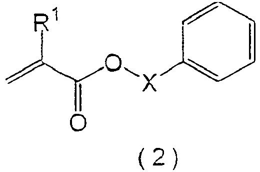 (in Formula (2), R¹ denotes a hydrogen atom or a methyl group and X denotes a single bond or a divalent linking group.)

R¹ in Formula (2) denotes a hydrogen atom or a methyl group and in terms of cure rate is preferably a hydrogen atom.

X in Formula (2) is preferably for example an alkylene group or a group formed by combining one or more alkylene groups and one or more bonds selected from the group consisting of an ether bond, an ester bond, a urethane bond, and a urea bond, more preferably an alkylene group, an alkyleneoxy group, or a polyalkyleneoxy group, and particularly preferably an alkylene group.

The alkylene group preferably has 2 to 10 carbons, more preferably has 2 to 4 carbons, and particularly preferably has 2 carbons. Furthermore, the alkylene group may have a substituent, and examples of the substituent include an alkyl group, an aryl group, a halogen atom, and a hydroxy group.

Among them, as the compound represented by Formula (2), phenoxyethyl (meth)acrylate is preferable, and phenoxyethyl acrylate is particularly preferable.

The content of the compound represented by Formula (2) is preferably 5 to 45 wt% relative to the weight of the entire ink composition, more preferably 7 to 40 wt%, and particularly preferably 10 to 35 wt%. When in the above-mentioned range, a curing profile is promoted in which, while strongly promoting the curability of the interior of a printed material, the outermost surface alone of a cured film is selectively maintained in a liquid state for a long period of time, and an image having high surface gloss, high image density, and little feeling of grain for a low density image can be obtained. Furthermore, in the above-mentioned range, an ink composition having excellent affinity for a support and excellent substrate adhesion to, in particular, polystyrene, polycarbonate, or polypropylene can be obtained. 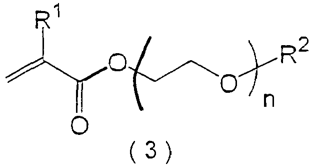 (in Formula (3), R1 denotes a hydrogen atom or a methyl group, R2 denotes a alkyl group and n denotes an integer of 1 to 3.)

R¹ in Formula (3) denotes a hydrogen atom or a methyl group, and in terms of cure rate is preferably a hydrogen atom.

Furthermore, n in Formula (3) is preferably 2 or 3, and more preferably 2.

R² in Formula (3) is preferably an ethyl group, a propyl group, or a butyl group, and most preferably an ethyl group.

As the compound of Formula (3), 2-ethoxyethoxyethyl acrylate is most preferable.

The content of the compound represented by Formula (3) is preferably 1 to 15 wt% relative to the weight of the entire ink composition, more preferably 2 to 10 wt%, and yet more preferably 2 to 8 wt%. When in the above-mentioned range, an ink composition having excellent affinity for a support, having excellent substrate adhesion to, in particular, polystyrene, polycarbonate, or polypropylene, and having excellent antiblocking properties can be obtained.

### (Component A-4) Di- and tri-functional (meth)acrylate compound

The ink composition of the present invention comprises (Component A-4) a di-and tri-functional (meth)acrylate compound in a range of 1 to 9 wt% relative to the entire weight of the ink composition. The content of Component A-4 is preferably at least 1.5 wt% but no greater than 8.0 wt% relative to the entire weight of the ink composition, more preferably at least 2.0 wt% but no greater than 7.0 wt%, and particularly preferably at least 2.0 wt% but no greater than 5.0 wt%.

As the difunctional (meth)acrylate compound, a difunctional (meth)acrylate compound having an optionally branched hydrocarbon chain having 5 or more carbons is preferable.

Preferred examples of the difunctional (meth)acrylate compound include a difunctional (meth)acrylate compound having a hydrocarbon chain having 5 or more carbons in the molecule, specific examples thereof including neopentyl glycol di(meth)acrylate, propylene oxide (PO)-modified neopentyl glycol di(meth)acrylate, hexanediol di(meth)acrylate, PO-modified hexanediol di(meth)acrylate, nonanediol di(meth)acrylate, decanediol di(meth)acrylate, dodecanediol! di(meth)acrylate, tridecanediol di(meth)acrylate, octadecanediol di(meth)acrylate, 3-methyl-1,5-pentanediol di(meth)acrylate, 2-*n*-butyl-2-ethyl-1,3-propanediol di(meth)acrylate, cyclohexanedimethanol di(meth)acrylate, and cyclohexane di(meth)acrylate. Among them, 3-methyl-1 ,5-pentanediol di(meth)acrylate is particularly preferable.

Preferred examples of the trifunctional (meth)acrylate compound include pentaerythritol tri(meth)acrylate, trimethylolethane tri(meth)acrylate, and trimethylolpropane tri(meth)acrylate. Among them, trimethylolpropane tri(meth)acrylate is more preferable.

In general, with regard to a radically polymerizable composition, a cured film shrinks after being cured. It is surmised that, as a result of a radically polymerizable monomer, which is a liquid, undergoing radical polymerization to thus form a covalent bond and solidify, the intermolecular distance decreases and the volume reduces. Because of this volume reduction, strain energy is generated between a support and the cured film, thus causing degradation of substrate adhesion. The ink composition of the present invention comprises a di- or higher-functional (meth)acrylate compound at no greater than 9 wt%. When the di- or higher-functional (meth)acrylate compound is no greater than 9 wt%, the cured film is softened and undergoes leveling after cure, and as a result the strain energy is eliminated and substrate adhesion is improved. The effects are particularly prominent for adhesion to polypropylene.

On the other hand, due to the ink composition of the present invention comprising at least 1 wt% of a di- or higher-functional (meth)acrylate compound, good antiblocking properties are obtained. It is surmised that after being cured, polymerization initiator residue or a monomer component such as uncured monomer remains in the cured film, and if printed materials are stored in stack, the uncured component exudes onto the printed material surface and adheres to another printed material, thus causing blocking. Adding at least 1 wt% of a di- or higher-functional (meth)acrylate compound enables a matrix to be formed in the cured film, thus suppressing exuding out of residue in the film and thereby giving good antiblocking properties.

Therefore, due to the ink composition of the present invention comprising a di- or higher-functional (meth)acrylate compound at a content of 1 to 9 wt% of the entire ink composition, an ink composition having a balance between good antiblocking properties and substrate adhesion can be obtained.

The total content of Components A-1 to A-3 of the ink composition of the present invention is 65 to 90 wt% of the entire ink composition, and preferably 70 to 85 wt%. When in the above-mentioned range, an image having high surface gloss, high image density, and little feeling of grain for a low density image can be obtained. Furthermore, an ink composition having excellent substrate adhesion can be obtained.

### Other polymerizable compound

The ink composition of the present invention may comprise a polymerizable compound other than Component A-1 to Component A-4.

As the other polymerizable compound, there is no limitation but an ethylenically unsaturated compound is preferable.

As the other polymerizable compound, a known polymerizable compound may be used, and examples thereof include a (meth)acrylate compound, a vinyl ether compound, an allyl compound, an *N*-vinyl compound, and an unsaturated carboxylic acid other than Component A-1 to Component A-4. Examples thereof include radically polymerizable monomers described in JP-A-2009-221414, polymerizable compounds described in JP-A-2009-209289, and ethylenically unsaturated compounds described in JP-A-2009-191183.

Preferred examples of the other polymerizable compound include an aromatic group-containing monofunctional (meth)acrylate compound. The cyclic structure of the aromatic group-containing monofunctional (meth)acrylate compound may contain a hetero atom such as O, N, S, etc.

Preferred examples of an aromatic ring structure that the aromatic group-containing monofunctional (meth)acrylate compound may have include a ring structure selected from the group consisting of naphthalene, anthracene, indene, fluorene, *1H*-phenalene, phenanthrene, triphenylene, pyrene, naphthacene, tetraphene, biphenyl, as-indacene, *s-*indacene, acenaphthylene, fluoranthene, acephenanthryiene, aceanthrylene, chrysene, pleiadene, furan, thiophene, pyrroline, pyrazoline, imidazoline, isooxazoline, isothiazoline, pyridine, pyridazine, pyrimidine, pyrazine, triazole, and tetrazole.

Examples of the other polymerizable compound include unsaturated carboxylic acids such as acrylic acid, methacrylic acid, itaconic acid, crotonic acid, isocrotonic acid, and maleic acid, and salts thereof, an ethylenically unsaturated group-containing anhydride, acrylonitrile, styrene and, furthermore, radically polymerizable compounds such as various types of unsaturated polyesters, unsaturated polyethers, unsaturated polyamides, and unsaturated urethane.

Specific examples of the other polymerizable compound include (meth)acrylic acid derivatives such as isobornyl (meth)acrylate, 2-ethylhexyl (meth)acrylate, 2-hydroxyethyl (meth)acrylate, carbitol (meth)acrylate, cyclohexyl (meth)acrylate, tetrahydrofurfuryl (meth)acrylate, benzyl (meth)acrylate, methyl (meth)acrylate, *n-*butyl (meth)acrylate, allyl (meth)acrylate, glycidyl (meth)acrylate, dimethylaminomethyl (meth)acrylate, bis(4-(meth)acryloxypolyethoxyphenyl)propane, ethylene glycol di(meth)acrylate, diethylene glycol di(meth)acrylate, triethylene glycol di(meth)acrylate, tetraethylene glycol di(meth)acrylate, polyethylene glycol di(meth)acrylate, polypropylene glycol di(meth)acrylate, pentaerythritol tetra(meth)acrylate, dipentaerythritol tetra(meth)acrylate, oligoester (meth)acrylate, 2,2-bis(4-(meth)acryloxypolyethoxyphenyl)propane, *N*-methylol (meth)acrylamide, diacetone (meth)acrylamide, and epoxy (meth)acrylate; allyl compound derivatives such as allyl glycidyl ether, diallyl phthalate, triallyl trimellitate, etc.

More specifically, commercially available or industrially known radically polymerizabie or crosslinking monomers, oligomers, and polymers, such as those described in 'Kakyozai Handobukku' (Crosslinking Agent Handbook), Ed. S. Yamashita (Taiseisha, 1981); 'UV/EB Koka Handobukku (Genryo)' (UV/EB Curing Handbook (Starting Materials)) Ed. K. Kato (Kobunshi Kankoukai, 1985); 'UV/EB Koka Gijutsu no Oyo to Shijyo' (Application and Market of UV/EB Curing Technology), p. 79, Ed. RadTech (CMC, 1989); and E. Takiyama 'Poriesuteru Jushi Handobukku' (Polyester Resin Handbook), (The Nikkan Kogyo Shimbun Ltd., 1988) may be used.

The molecular weight of the other polymerizable monomer is preferably 80 to 2,000 and more preferably 80 to 1,000, and yet more preferably 80 to 800.

Furthermore, as the other polymerizable compound, it is preferable to use a monofunctional vinyl ether compound.

Examples of the monofunctional vinyl ether compound that are suitably used include ethylene glycol monovinyl ether, triethylene glycol monovinyl ether, hydroxyethyl monovinyl ether, ethyl vinyl ether, *n*-butyl vinyl ether, isobutyl vinyl ether, octadecyl vinyl ether, cyclohexyl vinyl ether, hydroxybutyl vinyl ether, 2-ethylhexyl vinyl ether, hydroxynonyl monovinyl ether, cyclohexanedimethanol monovinyl ether, *n*-propyl vinyl ether, isopropyl vinyl ether, dodecyl vinyl ether, and diethylene glycol monovinyl ether.

Furthermore, a polyfunctional vinyl ether can be used. Examples of polyfunctional vinyl ether compounds that are suitably used include di- or tri-vinyl ether compounds such as ethylene glycol divinyl ether, diethylene glycol divinyl ether, triethylene glycol divinyl ether, propylene glycol divinyl ether, dipropylene glycol divinyl ether, butanediol divinyl ether, hexanediol divinyl ether, cyclohexanedimethanol divinyl ether, and trimethylolpropane trivinyl ether.

When the ink composition of the present invention comprises the other polymerizable compound, the content of the other polymerizable compound in the ink composition of the present invention is preferably 1 to 30 wt% relative to the total weight of the ink composition, more preferably 3 to 25 wt%, and particularly preferably 5 to 20 wt%.

### (Component B) Polymerization initiator

The ink composition of the present invention comprises (Component B) a polymerization initiator. An ink composition discharged onto a support is cured by irradiating with actinic radiation. This is due to the polymerization initiator contained in the ink composition of the present invention undergoing decomposition by irradiation with actinic radiation to thus generate a polymerization-initiating species such as a radical, and the initiating species functioning to cause and promote a polymerization reaction of a polymerizable compound. In this process, if a sensitizer is present together with the polymerization initiator in the ink composition, the sensitizer in the system absorbs actinic radiation to thus attain an excited state and comes into contact with the polymerization initiator to promote decomposition of the polymerization initiator, thereby enabling a more sensitive curing reaction to be achieved. Examples of the sensitizer include those described in JP-A-2008-208190.

The polymerization initiator is a polymerization initiator that is used in a radical polymerization reaction, and the ink composition of the present invention comprises (Component B-1) a bisacylphosphine compound. In accordance with the initiator and Components A-1 to A-4 above being combined, a printed material having excellent interior curability is obtained, and as a result a printed material having excellent surface gloss and image density and further having excellent substrate adhesion can be obtained. Component B-1 is explained below.

### (Component B-1) Bisacylphosphine compound

The bisacylphosphine compound is not particularly limited; a known compound may be used, and a compound represented by Formula (b-1) below is preferable. 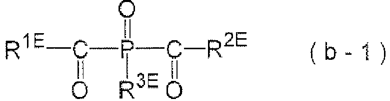 (In Formula (b-1), R^{1E}, R^{2E}, and R^{3E} independently denote an aromatic hydrocarbon group that may have a methyl group or an ethyl group as a substituent.)

As the bisacylphosphine compound, a known bisacylphosphine oxide compound may be used. Examples thereof include bisacylphosphine oxide compounds described in JP-A-3-101686, JP-A-5-345790, and JP-A-6-298818.

Specific examples thereof include bis(2,6-dichiorobenzoyl)phenylphosphine oxide, bis(2,6-dichlorobenzoyl)-2,5-dimethylphenylphosphine oxide, bis(2,6-dichlorobenzoyl)-4-ethoxyphenylphosphine oxide, bis(2,6-dichlorobenzoyl)-4-propylphenylphosphine oxide, bis(2,6-dichlorobenzoyl)-2-naphthylphosphine oxide, bis(2,6-dichlorobenzoyl)-1-naphthylphosphine oxide, bis(2,6-dichlorobenzoyl)-4-chlorophenylphosphine oxide, bis(2,6-dichlorobenzoyl)-2,4-dimethoxyphenylphosphine oxide, bis(2,6-dichlorobenzoyl)decylphosphine oxide, bis(2,6-dichlorobenzoyl)-4-octylphenylphosphine oxide, bis(2,4,6-trimethylbenzoyl)phenylphosphine oxide, bis(2,4,5-trimethylbenzoyl)-2,5-dimethylphenylphosphine oxide, bis(2,5-dichloro-3,4,5-trimethoxybenzoyl)-2,5-dimethylphenylphosphineoxide,bis(2,6-dichloro-3,4,5-trimethoxybenzoyl)-4-ethoxyphenylphosphine oxide,bis(2-methyl-1-naphthoyl)-2,5-dimethylphenylphosphine oxide, bis(2-methyl-1-naphthoyl)-4-ethoxyphenylphosphine oxide, bis(2-methyl-1-naphthoyl)-2-naphthylphosphine oxide, bis(2-methyl-1-naphthoyl)-4-propylphenylphosphine oxide, bis(2-methyl-1-naphthoyl)-2,5-dimethylphenylphosphine oxide, bis(2-methoxy-1-naphthoyl)-4-ethoxyphenylphosphine oxide, bis(2-chloro-1 -naphthoyl)-2,5-dimethylphenylphosphine oxide, and bis(2,6-dimethoxybenzoyl)-2,4,4-trimethylpentylphosphine oxide.

Among them, the bisacylphosphine compound is preferably bis(2,4,6-trimethylbenzoyl)phenylphosphine oxide (IRGACURE 819: Ciba Specialty Chemicals), bis(2,6-dimethoxybenzoyl)-2,4,4-trimethyfpentylphenylphosphine oxide, etc.

The content of Component B-1 is preferably 2 to 9 wt% relative to the weight of the entire ink composition, and more preferably 2.5 to 8.5 wt%.

### (Component B-2) Thioxanthone compound

The ink composition of the present invention may preferably comprise (Component B-2) a thioxanthone compound as a polymerization initiator in addition to Component B-1. By adding Component B-2, graininess is improved.

The thioxanthone compound is not particularly limited; a known compound may be used, and a compound represented by Formula (b-2) below is preferable.

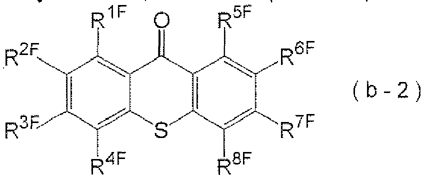

In Formula (b-2) above, R^{1F}, R^{2F}, R^{3F}, R^{4F}, R^{5F}, R^{6F}, R^{7F}, and R^{8F} independently denote a hydrogen atom, an alkyl group, a halogen atom, a hydroxy group, a cyano group, a nitro group, an amino group, an alkylthio group, an alkylamino group (The alkylamino group includes the case of monoalkylsubstituted amino group and dialkylsubstituted amino group. It is same also in the following.), an alkoxy group, an alkoxycarbonyl group, an acyloxy group, an acyl group, a carboxy group, or a sulfo group. The number of carbon atoms of an alkyl moiety in the alkyl group, alkylthio group, alkylamino group, alkoxy group, alkoxycarbonyl group, acyloxy group, and acyl group is preferably 1 to 20, more preferably 1 to 8, and yet more preferably 1 to 4.

Two of R^{1F}, R^{2F}, R^{3F}, R^{4F}, R^{5F}, R^{6F}, R^{7F}, and R^{8F} that are adjacent may be joined to each other to form a ring. When they form a ring, examples of the ring structure include a 5- or 6-membered aliphatic or aromatic ring; it may be a heterocyclic ring containing an element other than a carbon atom, and rings thus formed may be further combined to form a bicyclic ring, for example a fused ring. These ring structures may further have a substituent. Examples of the substituent include a halogen atom, a hydroxy group, a cyano group, a nitro group, an amino group, an alkylthio group, an alkylamino group, an alkoxy group, an alkoxycarbonyl group, an acyloxy group, an acyl group, a carboxy group, and a sulfo group. Examples of a heteroatom when the resulting ring structure is a heterocyclic ring include N, O, and S.

Examples of the thioxanthone compound include thioxanthone, 2-isopropylthioxanthone, 4-isopropylthioxanthone, 2-chlorothioxanthone, 2-dodecylthioxanthone, 2,4-dichlorothioxanthone, 2,3-diethylthioxanthone, 1-chloro-4-propoxythioxanthone, 2-cyclohexylthioxanthone, 4-cyclohexylthioxanthone, 2,4-diethylthioxanthone, 2,4-dimethylthioxanthone, 1-methoxycarbonylthioxanthone, 2-ethoxycarbonylthioxanthone, 3-(2-methoxyethoxycarbonyl)thioxanthone, 4-butoxycarbonylthioxanthone, 3-butoxycarbonyl-7-methylthioxanthone, 1-cyano-3-chlorothioxanthone, 1-ethoxycarbonyl-3-chlorothioxanthone, 1-ethoxycarbonyl-3-ethoxythioxanthone, 1-ethoxycarbonyl-3-aminothioxanthone, 1-ethoxycarbonyl-3-phenylsulfurylthioxanthone, 3,4-di[2-(2-methoxyethoxy)ethoxycarbonyl]thioxanthone, 1-ethoxycarbonyl-3-(1-methyl-1-morpholinoethyl)thioxanthone,2-methyl-6-dimethoxymethylthioxanthone, 2-methyl-6-(1,1-dimethoxybenzyl)thioxanthone, 2-morpholinomethylthioxanthone, 2-methyl-6-morpholinomethylthioxanthone, *N-*allylthioxanthone-3,4-dicarboximide, *N-n*-octylthioxanthone-3,4-dicarboxyimide, *N-*(1,1,3,3-tetramethylbutyl)thioxanthone-3,4-dicarboxyimide, 1-phenoxythioxanthone, 6-ethoxycarbonyl-2-methoxythioxanthone, 6-ethoxycarbonyl-2-methylthioxanthone, thioxanthone-2-polyethylene glycol ester, and 2-hydroxy-3-(3,4-dimethyl-9-oxo-9H-thioxanthon-2-yloxy)-*N,N,N*-trimethyl-1-propanaminium chloride. Among them, from the viewpoint of ready availability and curability, thioxanthone, 2,3-diethylthioxanthone, 2,4-diethylthioxanthone, 2,4-dichlorothioxanthone, 1-chloro-4-propoxythioxanthone, 2-cyclohexylthioxanthone, 4-cyciohexylthioxanthone, 2-isopropylthioxanthone, and 4-isopropylthioxanthone are preferable, and 2-isopropylthioxanthone and 4-isopropylthioxanthone are more preferable.

The content of Component B-2 is preferably 0.5 to 7.0 wt% of the entire ink composition, and more preferably 0.7 to 6.5 wt%.

### (Component B-3) α-Hydroxyketone compound

The ink composition of the present invention may preferably comprise (Component B-3) an α-hydroxyketone compound as a polymerization initiator in addition to Component B-1 and Component B-2.

Examples of the α-hydroxyketone compound include 1-[4-(2-hydroxyethoxy)phenyl]-2-hydroxy-2-methyl-1-propan-1-one, 2-hydroxy-2-methyl-1-phenylpropan-1-one, and 1-hydroxycyclohexyl phenyl ketone. Among them, 1-hydroxycyclohexyl phenyl ketone compound is preferable. The 1-hydroxycyclohexyl phenyl ketone compound referred to in the present invention comprises a compound obtained by substituting 1-hydroxycyclohexyl phenyl ketone with any substituent. The substituent may be selected freely from a range that enables an ability as a radical polymerization initiator to be exhibited, and specific examples thereof include an alkyl group having 1 to 4 carbons.

The content of Component B-3 is preferably 0.9 to 5.0 wt% of the entire ink composition, and more preferably 1.5 to 4.0 wt%.

In the present invention, it is confirmed that the inclusion of a bisacylphosphine compound and a thioxanthone compound is very effective in suppressing the graininess of an image.

A feeling of grain of an image is observed in particular when the illumination intensity of actinic radiation is low, and it is surmised that this is a characteristic phenomenon for an actinic radiation-curing type inkjet ink printed material. It is surmised that the interior of an inkjet fired droplet fired onto a support does not completely solidify soon after exposure to actinic radiation but maintains a low viscosity state for a long period of time, and as a result fired droplets themselves aggregate and form a visibly grainy image. This is particularly conspicuous in a low density image.

It is also surmised from the observation that this phenomenon occurs more easily as the illumination intensity of actinic radiation is lowered that this is due to the interior curability.

It is surmised that due to the ink composition of the present invention comprising Components A-1 to A-4 and B-1 in combination, excellent interior curability is obtained, and as a result, an ink composition that gives a suppressed feeling of grain is obtained.

The total content of Component B-1 and Component B-2 in the ink composition of the present invention is preferably 2.5 to 10 wt% of the entire ink composition, more preferably 3.0 to 9.0 wt%, yet more preferably 3.5 to 8.0 wt%, and particularly preferably 4.5 to 7.0 wt%,

Furthermore, the total content of the polymerization initiator in the ink composition of the present invention is preferably 6.0 to 18.0 wt% of the entire ink composition, more preferably 8.0 to 15.0 wt%, and most preferably 9.0 to 14.0 wt%.

When in the above-mentioned range, a curing profile is promoted in which, while strongly promoting the curability of the interior of a printed material, the outermost surface alone of a cured film is selectively maintained in a liquid state for a long period of time, and an image having high surface gloss, high image density, and little feeling of grain for a low density image can be obtained. Furthermore, since the interior curability of a cured film is excellent, a printed material having excellent substrate adhesion and antiblocking properties can be obtained.

The ink composition of the present invention may comprise other polymerization initiator other than Components B-1 to B-3.

Examples of the other polymerization initiator include a monoacylphosphine compound, α-aminoalkylketone, an aromatic ketone, an aromatic onium salt compound, an organic peroxide, a thio compound, a hexaarylbiimidazole compound, a ketoxime ester compound, a borate compound, an azinium compound, a metallocene compound, an active ester compound, and a compound having a carbon-halogen bond.

Details of the above-mentioned polymerization initiators are known to a person skilled in the art, and are described in for example paragraphs 0090 to 0116 of JP-A-2009-185186.

### Colorant

In the present invention, the ink composition may preferably contain a colorant in order to improve the visibility of a formed image area.

The colorant is not particularly limited, but a pigment and an oil-soluble dye that have excellent weather resistance and rich color reproduction are preferable, and it may be selected from any known coloring agent such as a soluble dye. It is preferable that the colorant does not function as a polymerization inhibitor in a polymerization reaction, which is a curing reaction. This is because the sensitivity of the curing reaction by actinic radiation should not be degraded.

The pigment that can be used in the present invention is not particularly limited and, for example, organic and inorganic pigments having the numbers below described in the Color Index may be used.

That is, as a red or magenta pigment, C.I. Pigment Red 3 (is also called 'Pigment Red 3'), 5, 19, 22, 31, 38, 42, 43, 48:1, 48:2, 48:3, 48:4, 48:5, 49:1, 53:1, 57:1, 57:2, 58:4, 63:1, 81, 81:1, 81:2, 81:3, 81:4, 88, 104, 108, 112, 122, 123, 144, 146, 149, 166, 168, 169, 170, 177, 178, 179, 184, 185, 202, 208, 216, 226, or 257, C.I. Pigment Violet 3 (is also called 'Pigment Violet 3'), 19, 23, 29, 30, 37, 50, or 88, and C.I. Pigment Orange 13 (is also called 'Pigment Orange 13'), 16, 20, or 36; as a blue or cyan pigment, C.I. Pigment Blue 1 (is also called 'Pigment Blue 1'), 15, 15:1, 15:2, 15:3, 15:4, 15:6, 16, 17:1, 22, 27, 28, 29, 36, or 60; as a green pigment, C.I. Pigment Green 7 (is also called 'Pigment Green 7'), 26, 36, or 50; as a yellow pigment, C.I. Pigment Yellow 1 (is also called 'Pigment Yellow 1'), 3, 12, 13, 14, 17, 34, 35, 37, 55, 74, 81, 83, 93, 94, 95, 97, 108, 109, 110, 120, 128, 137, 138, 139, 150, 153, 154, 155, 157, 166, 167, 168, 180, 185, or 193; as a black pigment, C.I. Pigment Black 7 (is also called 'Pigment Black 7'), 28, or 26; as a white pigment, C.I. Pigment White 6 (is also called 'Pigment White 6'), 18, or 21, etc. may be used according to the intended application.

In the present invention, the magenta pigment is preferably a mixed crystal pigment of C.I. Pigment Violet 19 and C.I. Pigment Red 202, a mixed crystal pigment of C.I. Pigment Violet 19 and C.I. Pigment Red 122, C.I. Pigment Red 122, C.I. Pigment Red 202, or C.I. Pigment Violet 19, more preferably a mixed crystal pigment of C.I. Pigment Violet 19 and C.I. Pigment Red 202, a mixed crystal pigment of C.I. Pigment Violet 19 and C.I. Pigment Red 122, C.I. Pigment Red 122, or C.I. Pigment Red 202, yet more preferably a mixed crystal pigment of C.I. Pigment Violet 19 and C.I. Pigment Red 202 or a mixed crystal pigment of C.I. Pigment Violet 19 and C.I. Pigment Red 122, and particularly preferably a mixed crystal pigment of C.I. Pigment Violet 19 and C.I. Pigment Red 202.

In the present invention, the yellow pigment is preferably C.I. Pigment Yellow 150, 155, or 180, more preferably C.I. Pigment Yellow 150 or 155, and particularly preferably C.I. Pigment Yellow 155.

In the present invention, a disperse dye may be used in a range that enables it to be dissolved in a water-immiscible organic solvent. Disperse dyes generally include water-soluble dyes, but in the present invention it is preferable for the disperse dye to be used in a range such that it dissolves in a water-immiscible organic solvent.

Specific preferred examples of the disperse dye include C.I. Disperse Yellow 5, 42, 54, 64, 79, 82, 83, 93, 99, 100, 119, 122, 124, 126, 160, 184:1, 186, 198, 199, 201, 204, 224, and 237; C.I. Disperse Orange 13, 29, 31:1, 33, 49, 54, 55, 66, 73, 118, 119, and 163; C.I. Disperse Red 54, 60, 72, 73, 86, 88, 91, 92, 93, 111, 126, 127, 134, 135, 143, 145, 152, 153, 154, 159, 164, 167:1, 177, 181, 204, 206, 207, 221, 239, 240, 258, 277, 278, 283, 311, 323, 343, 348, 356, and 362; C.I. Disperse Violet 33; C.I. Disperse Blue 56, 60, 73, 87, 113, 128, 143, 148, 154, 158, 165, 165:1, 165:2, 176, 183, 185, 197, 198, 201, 214, 224, 225, 257, 266, 267, 287, 354, 358, 365, and 368; and C.I. Disperse Green 6:1 and 9.

The colorant is preferably added to the ink composition and then dispersed in the ink composition to an appropriate degree. For dispersion of the colorant, for example, a dispersing machine such as a ball mill, a sand mill, an attritor, a roll mill, an agitator, a Henschel mixer, a colloidal mill, an ultrasonic homogenizer, a pearl mill, a wet type jet mill, or a paint shaker may be used.

In the preparation of an ink composition, the colorant may be added directly to the ink composition together with other components. Furthermore, in order to improve dispersibility it may be added in advance to a solvent or a dispersing medium such as a polymerizable compound used in the present invention, homogeneously dispersed or dissolved, and then added to the ink composition.

In the present invention, in order to avoid the problem of the solvent resistance being degraded when the solvent remains in the cured image and the VOC (Volatile Organic Compound) problem of the residual solvent, it is preferable to add in advance the colorant to the dispersing medium such as the polymerizable compound. That is, it is preferable that the ink composition does not comprise the solvent. As a polymerizable compound used as the dispersing medium of the colorant, it is preferable in terms of dispersion suitability to select a monomer having the lowest viscosity. The colorants may be used by appropriately selecting one type or two or more types thereof according to the intended purpose of the ink composition.

When a colorant such as a pigment that is present as a solid in the ink composition is used, it is preferable for the colorant, the dispersant, the dispersing medium, dispersion conditions, and filtration conditions to be set so that the average particle size of colorant particles is preferably 0.005 to 0.5 µm, more preferably 0.01 to 0.45 µm, and yet more preferably 0.015 to 0.4 µm. It is preferable for the colorant to control its particle size, since clogging of a head nozzle can be suppressed and the storage stability, transparency, and curing sensitivity of the ink composition can be maintained.

The content of the colorant in the ink composition is appropriately selected according to the color and the intended purpose, and is preferably 0.01 to 30 wt% relative to the weight of the entire ink composition.

### Dispersant

The ink composition of the present invention preferably comprises a dispersant. In particular, when the pigment is used, the ink composition preferably comprises a dispersant in order to stably disperse the pigment in the ink composition.

As the dispersant that can be used in the present invention, a polymeric dispersant is preferable. The 'polymeric dispersant' referred to in the present invention means a dispersant having a weight-average molecular weight of 1,000 or greater.

Examples of the polymeric dispersant include polymeric dispersants such as DlSPERBYK-1 (l1, DISPERBYK-102, DISPERBYK-103, DISPERBYK-106, DiSPERBYK-111, DISPERBYK-161, DiSPERBYK-162, DISPERBYK-163, DISPERBYK-164, DISPERBYK-166, DISPERBYK-167, DISPERBYK-168, DISPERBYK-170, D1SPE.RBYK-171, DISPERBYK-174, and DISPERBYK-182 (manufactured by BYK Chemie), EFKA4010, EFKA4046, EFKA4080, EFKA5010, EFKA5207, EFKA5244, EFKA6745, EFKA6750, EFKA7414, EFKA745, EFKA7462, EFKA7500, EFKA7570, EFKA7575, and EFKA7580 (manufactured by EFKA Additives), Disperse Aid 6, Disperse Aid 8, Disperse Aid 15, and Disperse Aid 9100 (manufactured by San Nopco Limited); various types of SOLSPERSE dispersants such as Solsperse 3000, 5000, 9000, 12000, 13240, 13940, 17000, 22000, 24000, 26000, 28000, 32000, 36000, 39000, 41000, and 71000 (manufactured by Noveon); Adeka Pluronic L31, F38, L42, L44, L61, L64, F68, L72, P95, F77, P84, F87, P94, L101, P103, F108, L121, and P-123 (manufactured by Adeka Corporation), lonet S-20 (manufactured by Sanyo Chemical Industries, Ltd.), and Disparlon KS-860, 873SN, and 874 (polymeric dispersant), #2150 (aliphatic poly carboxylic acid), and #7004 (polyether ester type) (manufactured by Kusumoto Chemicals, Ltd.).

The content of the dispersant in the ink composition of the present invention is appropriately selected according to the intended purpose, and is preferably 0.05 to 15 wt % relative to the weight of the entire ink composition.

### Surfactant

It is preferable that the ink composition of the present invention comprises neither a silicone-based surfactant nor a fluorine-based surfactant or comprises a total content of silicone-based and fluorine-based surfactants of less than 0.01 wt% relative to the total weight of the ink composition. It is more preferable that the ink composition comprises neither a silicone-based surfactant nor a fluorine-based surfactant or comprises the total content of the both surfactants of no greater than 0.005 wt%, and particularly preferable that the ink composition comprises neither a silicone-based surfactant nor a fluorine-based surfactant.

As a surfactant other than a silicone-based and a fluorine-based surfactants, those described in JP-A-62-173463 and JP-A-62-183457 can be cited. Examples thereof include an anionic surfactant such as a dialkyl sulfosuccinate salt, an alkylnaphthalene sulfonic acid salt, or a fatty acid salt, a nonionic surfactant such as a polyoxyethylene alkyl ether, a polyoxyethylene alkyl allyl ether, an acetylene glycol, or a polyoxyethylene-polyoxypropylene block copolymer, and a cationic surfactant such as an alkylamine salt or a quaternary ammonium salt.

In addition, it is preferable that the ink composition of the present invention also comprises no surfactant other than silicone-based and fluorine-based surfactants or comprises a total content of the surfactant other than silicone-based and fluorine-based surfactants of less than 0.01 wt% relative to the total weight of the ink composition. It is more preferable that the ink composition comprises no surfactant other than silicone-based and fluorine-based surfactants or comprises the total content of the surfactants of no greater than 0.005 wt%, and particularly preferable that the ink composition comprises no surfactant other than silicone-based and fluorine-based surfactants.

### Oligomer

The ink composition of the present invention preferably comprises an oligomer.

The oligomer is generally a polymer in which a limited number (usually 5 to 100) of monomers are bonded, and known compounds called oligomers may be selected freely, but in the present invention it is preferable to select a polymer having a weight-average molecular weight of 400 to 10,000 (more preferably 500 to 5,000).

The oligomer may have a radically polymerizable group. The radically polymerizable group is preferably an ethylenically unsaturated group, and more preferably a (meth)acryloxy group.

The oligomer in the present invention may be any oligomer, and examples thereof include an olefin-based oiigomer (an ethylene oligomer, a propylene oligomer, a butene oligomer, etc.), a vinyl-based oligomer (a styrene oligomer, a vinyl alcohol oligomer, a vinylpyrrolidone oligomer, an acrylate oligomer, a methacrylate oligomer, etc.), a diene-based oligomer (a butadiene oligomer, a chloroprene rubber, a pentadiene oligomer, etc.), a ring-opening polymerization type oligomer (di-, tri-, tetra-ethylene glycol, polyethylene glycol, polyethylimine, etc.), an addition-polymerization type oligomer (an oligoester acrylate, a polyamide oligomer, a polyisocyanate oligomer), and an addition-condensation oligomer (a phenolic resin, an amino resin, a xylene resin, a ketone resin, etc.). Among them an oligoester (meth)acrylate is preferable, and among them a urethane (meth)acrylate, a polyester (meth)acrylate, and an epoxy (meth)acrylate are preferable, and a urethane (meth)acrylate is more preferable.

As the urethane (meth)acrylate, an aliphatic urethane (meth)acrylate and an aromatic urethane (meth)acrylate may preferably be cited, and an aliphatic urethane (meth)acrylate may more preferably be cited.

Furthermore, the urethane (meth)acrylate is preferably a tetra- or lower-functional urethane (meth)acrylate, and more preferably a di- or lower-functional urethane (meth)acrylate.

In accordance with the urethane (meth)acrylate being contained, an ink composition having excellent adhesion to a substrate and excellent curability is obtained.

With respect to the oligomer, 'Origomar Handobukku (Oligomer Handbook)' (edited by Junji Furukawa, The Chemical Daily Co., Ltd.) may also be referred to.

As commercial products of oligomer, examples are as follows.

Examples of urethane (meth)acrylates include R1204, R1211, R1213, R1217, R1218, R1301, R1302, R1303, R1304, R1306, R1308. R1901, and R1150 manufactured by Dai-Ichi Kogyo Seiyaku Co., Ltd., the EBECRYL series (e.g. EBECRYL 239, 270, 4$58, 8492, 8894, 88D7, 8893, 9260, 1290, 1290K, 5129, 4842, 8210, 210, 4827, 6700, 4450, and 220) manufactured by Daicel-Cytec Company Ltd., NK Oligo U-4HA, U-6HA, U-15HA, U-108A, and U200AX manufactured by Shin-Nakamura Chemical Co., Ltd., Aronix M-1100, M-1200, M-1210, M-1310, M-1600, and M-1960 manufactured by Toagosei Co., Ltd., and CN964 A85 manufactured by Sartomer.

Examples of polyester (meth)acrylates include the EBECRYL series (e.g. EBECRYL 770, IRR467, 81, 84, 83, 80, 675, 800, 810, 812, 1657, 1810, IRR302, 450, 670, 830, 870, 1830, 1870, 2870, IRR267, 813, IRR483, 811, etc.) manufactured by Daicel-Cytec Company Ltd. and Aronix M-6100, M-6200, M-6250, M-6500, M-7100, M-8030, M-8060, M-8100, M-8530, M-8560, and M-9050 manufactured by Toagosei Co., Ltd.

Examples of epoxy (meth)acrylates include the EBECRYL series (e.g. EBECRYL 600, 860, 2958, 3411, 3600, 3605, 3700, 3701, 3703, 3702, 3708, RDX63182, 6040, etc.) manufactured by Daicel-Cytec Company Ltd.

With regard to the oligomer, one type thereof may be used on its own or two or more types may be used in combination.

The content of the oligomer in the ink composition of the present invention is, relative to the total weight of the ink composition, preferably 0.1 to 50 wt %, more preferably 0.5 to 20 wt %, and yet more preferably 1 to 10 wt %.

### Other components

The ink composition of the present invention may comprise as necessary, in addition to the above-mentioned components, a co-sensitizer, a UV absorber, an antioxidant, an antifading agent, a conductive salt, a solvent, a basic compound, etc. As these other components a known component may be used. Examples thereof include components described in JP-A-2009-221416.

Furthermore, from the viewpoint of storage properties and suppression of head clogging, the ink composition of the present invention preferably comprises a polymerization inhibitor.

The content of the polymerization inhibitor is preferably at 200 to 20,000 ppm relative to the total weight of the ink composition of the present invention.

Examples of the polymerization inhibitor include a nitroso-based polymerization inhibitor, a hindered amine-based polymerization inhibitor, hydroquinone, benzoquinone, *p*-methoxyphenol, TEMPO, TEMPOL, and Al cupferron.

### Ink set

The ink set of the present invention is explained below.

The ink set of the present invention comprises at least a cyan ink composition, a magenta ink composition, a yellow ink composition, and a black ink composition, and at least one of these ink compositions is the ink composition of the present invention.

The ink set of the present invention may comprise, in addition to the cyan ink composition, magenta ink composition, yellow ink composition, and black ink composition, another color ink composition, and may comprise two or more of the same color ink compositions. Examples of the other color ink composition include, but are not particularly limited to, a white ink composition, a light cyan ink composition, a light magenta ink composition, a gray ink composition, and a metallic ink composition.

Furthermore, in the ink set of the present invention, it is preferable for at least the cyan ink composition, the magenta ink composition, the yellow ink composition, and the black ink composition to be the ink composition of the present invention, and it is particularly preferable for all of the ink compositions contained in the ink set of the present invention to be the ink composition of the present invention.

A preferred pigment contained in the ink composition contained in the ink set of the present invention is explained below.

The cyan ink composition comprises at least a phthalocyanine pigment as a cyan pigment, which is a pigment exhibiting a blue or cyan color. Examples of the phthalocyanine pigment include C.I, Pigment Blue 15 (is also called 'Pigment Blue 15'), 15:1, 15:2, 15:3, 15:4, 15:6, 16, 17:1, 75, and 79.

The content of the phthalocyanine pigment in the cyan ink composition is preferably 1.8 to 3 wt% relative to the total weight of the cyan ink composition, and more preferably 2.0 to 2.8 wt%.

The magenta ink composition preferably comprises at least C.I. Pigment Violet 19, C.I. Pigment Red 122 or 202, or a mixed crystal pigment containing C.I. Pigment Violet 19 as a magenta pigment, which is a pigment exhibiting a red or magenta color.

Among them, the magenta pigment preferably comprises a C.I. Pigment Violet 19/C.I. Pigment Red 202 mixed crystal pigment, a C.I .Pigment Violet 19/C.I. Pigment Red 122 mixed crystal pigment, C.I. Pigment Violet 19, C.I. Pigment Red 122, or C.1. Pigment Red 202. It is more preferably a C.I. Pigment Violet 991C.1. Pigment Red 202 mixed crystal pigment, a C.f. Pigment Violet 191C.1. Pigment Red 122 mixed crystal pigment, C.l. Pigment Red 122, or C.l. Pigment Red 202, yet more preferably a C.I. Pigment Violet 191C.I. Pigment Red 202 mixed crystal pigment or a C.I. Pigment Violet 19/C.I. Pigment Red 122 mixed crystal pigment, and particularly preferably a C.I. Pigment Violet 19/C.I. Pigment Red 202 mixed crystal pigment.

The content of the magenta pigment is preferably 4.0 to 6.0 wt% relative to the total weight of the magenta ink composition, and more preferably 4.2 to 5.5 wt%.

The yellow ink composition preferably comprises at least C.I. Pigment Yellow 120, 128, 150, 151, 155, 180, or 213 as a yellow pigment, which is a pigment exhibiting a yellow color.

Among them, the yellow ink composition preferably comprises C.I. Pigment Yellow 150, 155, or 180, more preferably C.I. Pigment Yellow 150 or 155, and particularly preferably C.I. Pigment Yellow 155.

The content of the yellow pigment is preferably 2.0 to 4.0 wt% relative to the total weight of the yellow ink composition, and more preferably 2.1 to 3.8 wt%.

The black ink composition preferably comprises carbon black as a black pigment, which is a pigment exhibiting a black color.

The content of the carbon black in the black ink composition is preferably 2.0 to 3.5 wt% relative to the total weight of the black ink composition, and more preferably 2.2 to 3.2 wt%.

The ink set of the present invention preferably comprises at least a cyan ink composition, a magenta ink composition, a yellow ink composition, and a black ink composition, at least one of the cyan ink composition, the magenta ink composition, the yellow ink composition, and the black ink composition being the inkjet ink composition of the present invention, the cyan ink composition comprising a phthalocyanine pigment, the magenta ink composition comprising C.I. Pigment Violet 19, C.I. Pigment Red 122, or a mixed crystal pigment of C.I. Pigment Violet 19, the yellow ink composition comprising C.I. Pigment Yellow 150, 155, or 180, and the black ink comprising a carbon black pigment.

Furthermore, with regard to the ink set of the present invention, it is more preferable for the magenta ink composition to comprise a mixed crystal pigment of C.I. Pigment Violet 19 and for the yellow ink composition to comprise C.I. Pigment Yellow 150, 155, or 180.

Dispersion of a pigment used in the ink set of the present invention may be carried out in the same manner as for dispersion of a colorant described above.

### Inkjet recording method, inkjet recording device, and printed material

The inkjet recording method of the present invention is a method for forming an image by discharging the ink composition of the present invention onto a recording medium (support, recording material, etc.) for inkjet recording and curing the ink composition by irradiating the ink composition so discharged onto the recording medium with actinic radiation.

More specifically, the inkjet recording method of the present invention preferably comprises (a¹) a step of discharging the ink composition of the present invention onto a recording medium, and (b¹) a step of curing the ink composition by irradiating the discharged ink composition with actinic radiation.

Due to the inkjet recording method of the present invention comprising steps (a¹) and (b¹) above, an image is formed by the ink composition cured on the recording medium.

Furthermore, the printed material of the present invention is a printed material recorded by the inkjet recording method of the present invention.

In the step (a¹) in the inkjet recording method of the present invention, an inkjet recording device described in detail below may be used.

### Inkjet recording device

The inkjet recording device used in the inkjet recording method of the present invention is not particularly limited, and any known inkjet recording device that can achieve an intended resolution may be used. That is, any known inkjet recording device, such as a commercial product, may be selected and used in order to discharge an ink composition onto the recording medium (support) in the step (a¹) of the inkjet recording method of the present invention.

The inkjet recording device that can be used in the present invention is equipped with, for example, an ink supply system, a temperature sensor, and an actinic radiation source.

The ink supply system comprises, for example, a main tank containing the ink composition of the present invention, a supply pipe, an ink composition supply tank immediately before an inkjet head, a filter, and a piezo system inkjet head. The piezo system inkjet head may be driven so as to discharge a multisize dot of preferably 1 to 100 pL, and more preferably 8 to 30 pL, at a resolution of preferably 320 x 320 to 4,000 x 4,000dpi, more preferably 400 x 400 to 1,600 x 1,600dpi, and yet more preferably 720 x 720 dpi. Here, dpi referred to in the present invention means the number of dots per 2.54 cm.

As described above, since it is desirable for the inks of each color to be discharged at a constant temperature, the inkjet recording device is preferably equipped with a temperature stabilizer for stabilizing the temperature of the inks. Parts to be controlled to a constant temperature include all of the supply pipe system and the members from the ink tank (including an intermediate tank if it is provided) to the discharging face of the nozzle. A section from the ink supply tank to the inkjet head is thermally insulated and heated.

A method of controlling temperature is not particularly limited, but it is preferable to provide, for example, temperature sensors at a plurality of pipe section positions, and control heating according to the ink flow rate and the temperature of the surroundings. The temperature sensors may be provided on the ink composition supply tank and in the vicinity of the inkjet head nozzle. Furthermore, the head unit that is to be heated is preferably thermally shielded or insulated so that the device main body is not influenced by the temperature of the outside air. In order to reduce the printer start-up time required for heating, or in order to reduce the thermal energy loss, it is preferable to thermally insulate the head unit from other sections and also to reduce the heat capacity of the entire heated unit.

When the ink composition or the inkjet recording ink composition of the present invention is discharged using the above mentioned inkjet recording device, the ink composition is preferably discharged after being heated to preferably 25°C to 80°C, and more preferably 25°C to 50°C, so as to reduce the viscosity of the ink composition to preferably 3 to 15 mPa·s, and more preferably 3 to 13 mPa·s. In particular, it is preferable to use the ink composition having an ink viscosity at 25°C of no more than 50 mPa·s since good discharge stability can be obtained. By employing this method, high discharge stability can be realized.

The radiation curing type ink composition such as the ink composition of the present invention generally has a viscosity that is higher than that of a normal ink composition or a water-based ink composition used for an inkjet recording ink composition, and variation in viscosity due to a change in temperature at the time of discharge is large. Viscosity variation in the ink composition has a large effect on changes in liquid droplet size and changes in liquid droplet discharge speed and, consequently, causes the image quality to be degraded. It is therefore necessary to maintain the ink composition discharge temperature as constant as possible. In the present invention, the control range for the temperature of ink composition is preferably ±5°C of a set temperature, more preferably ±2°C of the set temperature, and yet more preferably ±1 °C of the set temperature.

Then (b¹) a step of curing the ink composition by irradiating the discharged ink composition with actinic radiation is explained.

The ink composition discharged onto the recording medium cures upon exposure to actinic radiation. This is due to an initiating species such as a radical being generated by decomposition of the photopolymerization initiator contained in the ink composition of the present invention by irradiation with actinic radiation, the initiating species functioning so as to make a polymerization reaction of a radically polymerizable compound take place and to promote it. In this process, if a sensitizer is present together with the polymerization initiator in the ink composition, the sensitizer in the system absorbs actinic radiation, becomes excited, and promotes decomposition of the polymerization initiator by contact with the polymerization initiator, thus enabling a curing reaction with higher sensitivity to be achieved.

The actinic radiation used in this process may include α rays, γ rays, an electron beam, X rays, UV rays, visible light, and IR rays. Although it depends on the absorption characteristics of the sensitizer, the peak wavelength of the actinic radiation is preferably 200 to 600 nm, more preferably 300 to 450 nm, yet more 320 to 420 nm, and particularly preferably 340 to 400 nm.

Furthermore, in the present invention, the photopolymerization initiation system has sufficient sensitivity for low output actinic radiation. The actinic radiation for curing is applied therefore so that the illumination intensity on the exposed surface is preferably 10 to 4,000 mW/cm², and more preferably 20 to 2,500 mW/cm².

As an actinic radiation source, a mercury lamp, a gas/solid laser, etc. are mainly used, and for UV photocuring inkjet ink composition a mercury lamp and a metal halide lamp are widely known. However, from the viewpoint of protection of the environment, there has recently been a strong desire for mercury not to be used, and replacement by a GaN semiconductor UV light emitting device is very useful from industrial and environmental viewpoints. Furthermore, LEDs (UV-LED) and LDs (UV-LD) have small dimensions, long life, high efficiency, and low cost, and their use as a photocuring inkjet light source can be expected.

Furthermore, light-emitting diodes (LED) and laser diodes (LD) may be used as the source of actinic radiation. In particular, when a UV ray source is needed, a UV-LED or a UV-LD may be used. For example, Nichia Corporation has marketed a violet LED having a wavelength of the main emission spectrum of between 365 nm and 420 nm. Furthermore, when a shorter wavelength is needed, US Pat. No. 6,084,250 discloses a LED that can emit actinic radiation whose wavelength is centered between 300 nm and 370 nm. Furthermore, another violet LED is available, and irradiation can be carried out with radiation of a different UV bandwidth. The actinic radiation source in the present invention is preferably a UV-LED, and a UV-LED having a peak wavelength at 340 to 400 nm is particularly preferable.

The maximum illumination intensity of the LED on a recording medium is preferably 10 to 2,000 mW/cm², more preferably 20 to 1,000 mW/cm², and particularly preferably 50 to 800 mW/cm².

The ink composition of the present invention is desirably exposed to such actinic radiation for preferably 0.01 to 120 sec., and more preferably 0.1 to 90 sec.

Irradiation conditions and a basic method for irradiation with actinic radiation are disclosed in JP-A-60-132767. Specifically, a light source is provided on either side of a head unit that includes an ink composition discharge device, and the head unit and the light source are made to scan by a so-called shuttle system. Irradiation with actinic radiation is carried out after a certain time (preferably 0.01 to 0.5 sec., more preferably 0.01 to 0.3 sec., and yet more preferably 0.01 to 0.15 sec.) has elapsed from when the ink composition has landed. By controlling the time from ink composition landing to irradiation so as to be a minimum in this way, it becomes possible to prevent the ink composition that has landed on a recording medium from spreading before being cured. Furthermore, since the ink composition can be exposed before it reaches a deep area of a porous recording medium that the light source cannot reach, it is possible to prevent monomer from remaining unreacted.

Furthermore, curing may be completed using another light source that is not driven. WO99/54415 discloses, as an irradiation method, a method employing an optical fiber and a method in which a collimated light source is incident on a mirror surface provided on a head unit side face, and a recorded area is irradiated with UV light. Such curing methods may be also applied to the inkjet recording method of the present invention.

By employing such a inkjet recording method as described above, it is possible to maintain a uniform dot diameter for landed ink composition even for various types of recording medium (support) having different surface wettability, thereby improving the image quality. In order to obtain a color image, it is preferable to superimpose colors in order from those with a high lightness. By superimposing ink compositions in order from one with high lightness, it is easy for radiation to reach a lower ink composition, the curing sensitivity is good, the amount of residual monomer decreases, and an improvement in adhesion can be expected. Furthermore, although it is possible to discharge all colors and then expose them at the same time, it is preferable to expose one color at a time from the viewpoint of promoting curing.

In this way the ink composition of the present invention may be cured by irradiation with actinic radiation in high sensitivity and form an image on the surface of the recording medium.

The inkjet recording method of the present invention may suitably employ the ink set of the present invention. The order in which colored ink compositions are discharged is not particularly limited, but it is preferable to apply to a recording medium from a colored ink composition having a high lightness; when the ink compositions of yellow, cyan, magenta, and black are used, they are preferably applied on top of the recording medium in the order yellow → cyan → magenta → black. Furthermore, when white is additionally used, they are preferably applied on top of the recording medium in the order white → yellow → cyan → magenta → black. Moreover, the present invention is not limited thereto, and an ink set comprising a total of seven colors, that is, light cyan, light magenta ink compositions and cyan, magenta, black, white, and yellow dark ink compositions may preferably be used, and in this case they are applied on top of the recording medium in the order white → light cyan → light magenta → yellow → cyan → magenta → black.

In the present invention, the recording medium is not particularly limited, and a recording medium known as a support and a recording material may be used. Examples thereof include paper, paper laminated with a plastic (e.g. polyethylene, polypropylene, polystyrene, etc.), a metal plate (e.g. aluminum, zinc, copper, etc.), a plastic film (e.g. cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, polyvinylacetal, etc.), and paper or plastic film laminated or vapor-deposited with the above metal. In the present invention, as the recording medium, a non-absorbing recording medium may suitably be used.

### EXAMPLES

The present invention is explained below more specifically by reference to Examples and Comparative Examples. However, the present invention should not be construed as being limited by these Examples. 'Parts' in the description below means 'parts by weight' unless otherwise specified.

Materials used in the present invention are as follows.
IRGALITE BLUE GLVO (phthalocyanine pigment, Ciba Specialty Chemicals)
CINQUASIA MAGENTA RT355D (C.I. Pigment Violet 19/C.I. Pigment Red 202 mixed crystal pigment, Ciba Specialty Chemicals)
IRGAZINE MAGENTA 2012 (C.I. Pigment Violet 19/C.I. Pigment Red 122 mixed crystal pigment, Ciba Specialty Chemicals)
HOSTAPERM RED E5B02 (C.I. Pigment Violet 19 pigment, Clariant)
INKJET MAGENTA E02 (C.I. Pigment Red 122 pigment, Clariant)
CINQUASIA MAGENTA RT343D (C.I. Pigment Red 202 pigment, Ciba Specialty Chemicals)
CROMOPHTAL RED A3B (C.I. Pigment Red 179 pigment, Ciba Specialty Chemicals)
NOVOPERM YELLOW PHG (C.I. Pigment Yellow 180 pigment, Clariant)
NOVOPERM YELLOW HN4G (C.I. Pigment Yellow 150 pigment, Clariant)
NOVOPERM YELLOW 4G01 (C.I, Pigment Yellow 155 pigment, Clariant)
CROMOPHTAL YELLOW 8GN (C.I. Pigment Yellow 128 pigment, Clariant, Comparative Example)
SPECIAL BLACK 250 (carbon black pigment, Ciba Specialty Chemicals)
Tipaque CR60-2 (titanium oxide pigment, Ishihara Sangyo Kaisha Ltd.)
SOLSPERSE 32000 (dispersant, Noveon)
SOLSPERSE 41000 (dispersant, Noveon)
V-CAP (*N*-vinylcaprolactam, ISP)
SR9003 (propylene glycol (PO)-modified neopentyl glycol diacrylate, Sartomer)
SR531 (mixture of 95 wt% of cyclic trimethylolpropane formal acrylate and 5 wt% of trimethylolpropane triacrylate, Sartomer)
SR339 (phenoxyethyl acrylate, Sartomer)
SR256 (2-ethoxyethoxyethyl acrylate, Sartomer)
SR395 (isodecyl acrylate, Sartomer)
EC620 (2-hydroxy-3-phenoxypropyl acrylate, Eternal Chemical)
SR351 S (trimethylolpropane triacrylate, Sartomer)
SR341 (3-methylpentanediol diacrylate, Sartomer)
FA512A (dicyclopentanyloxyethyl acrylate, Hitachi Chemical Co., Ltd.)
CN964 A85 (difunctional aliphatic urethane acrylate containing 15 wt% of tripropylene glycol diacrylate, Sartomer)
FIRSTCURE ST-1 (polymerization inhibitor, mixture of tris(*N*-nitroso-*N-*phenylhydroxylamine) aluminum (10 wt%) and phenoxyethyl acrylate (90 wt%), Chem First)
LUCIRIN TPO (photopolymerization initiator, 2,4,6-trimethylbenzoyldiphenylphosphine oxide, BASF)
IRGACURE 184 (photopolymerization initiator, 1-hydroxycyclohexyl phenyl ketone, Ciba-Geigy Ltd.)
IRGACURE 819 (bisacylphosphine photopolymerization initiator, Ciba-Geigy Ltd.)
IRGACURE 369 (α-aminoketone photopolymerization initiator, Ciba-Geigy Ltd.)
IRGACURE 907 (α-aminoketone photopolymerization initiator, Ciba-Geigy Ltd.)
SPEEDCURE ITX (photopolymerization initiator, isopropylthioxanthone, LAMBSON)
SPEEDCURE BP (photopolymerization initiator, benzophenone, LAMBSON)
BYK307 (silicone-based surfactant, BYK Chemie)

### Preparation of cyan mill base C1, phthalocyanine pigment

300 parts by weight of IRGALITE BLUE GLVO, 600 parts by weight of SR339, and 100 parts by weight of SOLSPERSE 32000 were mixed by stirring, thus giving cyan mill base C1. Preparation of cyan mill base C1 was carried out by dispersing using a Motor Mill M50 disperser (Eiger Machinery, Inc.) with zirconia beads having a diameter of 0.65 mm at a peripheral speed of 9 m/s for 4 hours.

### Preparation of magenta mill base MM1 (containing C.I. Pigment Violet 19/C.l. Pigment Red 202 mixed crystal pigment)

300 parts by weight of CINQUASIA MAGENTA RT355D, 600 parts by weight of SR339, and 100 parts by weight of SOLSPERSE 32000 were mixed by stirring, thus giving magenta mill base MM1. Preparation of magenta mill base MM1 was carried out by dispersing using a Motor Mill M50 disperser (Eiger Machinery, Inc.) with zirconia beads having a diameter of 0.65 mm at a peripheral speed of 9 m/s for 10 hours.

### Preparation of magenta mill base MM2 (containing C.I. Pigment Violet 19/C.I. Pigment Red 122 mixed crystal Pigment)

300 parts by weight of IRGAZINE MAGENTA 2012, 600 parts by weight of SR339, and 100 parts by weight of SOLSPERSE 32000 were mixed by stirring, thus giving magenta mill base MM2. Preparation of magenta mill base MM2 was carried out by dispersing using a Motor Mill M50 disperser (Eiger Machinery, Inc.) with zirconia beads having a diameter of 0.65 mm at a peripheral speed of 9 m/s for 10 hours.

### Preparation of magenta mill base MM3 (containing C.I. Pigment Violet 19)

300 parts by weight of HOSTAPERM RED E5B02, 600 parts by weight of SR339, and 100 parts by weight of SOLSPERSE 32000 were mixed by stirring, thus giving magenta mill base MM3. Preparation of magenta mill base MM3 was carried out by dispersing using a Motor Mill M50 disperser (Eiger Machinery, Inc.) with zirconia beads having a diameter of 0.65 mm at a peripheral speed of 9 m/s for 10 hours.

### Preparation of magenta mill base MM4 (containing C.I. Pigment Red 122)

300 parts by weight of INKJET MAGENTA E02, 600 parts by weight of SR339, and 100 parts by weight of SOLSPERSE 32000 were mixed by stirring, thus giving magenta mill base MM4. Preparation of magenta mill base MM4 was carried out by dispersing using a Motor Mill M50 disperser (Eiger Machinery, Inc.) with zirconia beads having a diameter of 0.65 mm at a peripheral speed of 9 m/s for 10 hours.

### Preparation of magenta mill base MM5 (containing C.I. Pigment Red 202)

300 parts by weight of CINQUASIA MAGENTA RT343D, 600 parts by weight of SR339, and 100 parts by weight of SOLSPERSE 32000 were mixed by stirring, thus giving magenta mill base MM5. Preparation of magenta mill base MM5 was carried out by dispersing using a Motor Mill M50 disperser (Eiger Machinery, Inc.) with zirconia beads having a diameter of 0.65 mm at a peripheral speed of 9 m/s for 10 hours.

### Preparation of magenta mill base MM6 (containing C.I. Pigment Red 179)

300 parts by weight of CROMOPHTAL RED A3B, 600 parts by weight of SR339, and 100 parts by weight of SOLSPERSE 32000 were mixed by stirring, thus giving magenta mill base MM6. Preparation of magenta mill base MM6 was carried out by dispersing using a Motor Mill M50 disperser (Eiger Machinery, Inc.) with zirconia beads having a diameter of 0.65 mm at a peripheral speed of 9 m/s for 10 hours.

### Preparation of yellow mill base YM1 (containing C.I. Pigment Yellow 155

300 parts by weight of NOVOPERM YELLOW 4G01, 600 parts by weight of SR339, and 100 parts by weight of SOLSPERSE 32000 were mixed by stirring, thus giving yellow mill base YM1. Preparation of yellow mill base YM1 was carried out by dispersing using a Motor Mill M50 disperser (Eiger Machinery, Inc.) with zirconia beads having a diameter of 0.65 mm at a peripheral speed of 9 m/s for 5 hours.

### Preparation of yellow mill base YM2 (containing C.I. Pigment Yellow 180)

300 parts by weight of NOVOPERM YELLOW PHG, 600 parts by weight of SR339, and 100 parts by weight of SOLSPERSE 32000 were mixed by stirring, thus giving yellow mill base YM2. Preparation of yellow mill base YM2 was carried out by dispersing using a Motor Mill M50 disperser (Eiger Machinery, Inc.) with zirconia beads having a diameter of 0.65 mm at a peripheral speed of 9 m/s for 10 hours.

### Preparation of yellow mill base YM3 (containing C.I. Pigment Yellow 150)

300 parts by weight of NOVOPERM YELLOW HN4G, 600 parts by weight of SR339, and 100 parts by weight of SOLSPERSE 32000 were mixed by stirring, thus giving yellow mill base YM3. Preparation of yellow mill base YM3 was carried out by dispersing using a Motor Mill M50 disperser (Eiger Machinery, Inc.) with zirconia beads having a diameter of 0.65 mm at a peripheral speed of 9 m/s for 5 hours.

### Preparation of yellow mill base YM4 (containing C.I. Pigment Yellow 128)

300 parts by weight of CROMOPHTAL YELLOW 8GN, 600 parts by weight of SR339, and 100 parts by weight of SOLSPERSE 32000 were mixed by stirring, thus giving yellow mill base YM4. Preparation of yellow mill base YM4 was carried out by dispersing using a Motor Mill M50 disperser (Eiger Machinery, Inc.) with zirconia beads having a diameter of 0.65 mm at a peripheral speed of 9 m/s for 5 hours.

### Preparation of black mill base K1 (containing a carbon black)

300 parts by weight of SPECIAL BLACK 250, 600 parts by weight of SR339, and 100 parts by weight of SOLSPERSE 32000 were mixed by stirring, thus giving black mill base K1. Preparation of black mill base K1 was carried out by dispersing using a Motor Mill M50 disperser (Eiger Machinery, Inc.) with zirconia beads having a diameter of 0.65 mm at a peripheral speed of 9 m/s for 7 hours.

### Preparation of white mill base E (containing a titanium oxide)

500 parts by weight of TIPAQUE CR60-2, 400 parts by weight of SR339, and 100 parts by weight of SOLSPERSE 41000 were mixed by stirring, thus giving white mill base E. Preparation of white mill base E was carried out by dispersing using a Motor Mill M50 disperser (Eiger Machinery, Inc.) with zirconia beads having a diameter of 0.65 mm at a peripheral speed of 9 m/s for 4 hours.

### Method for preparing ink composition

The materials described in Table 1 to Table 5 were mixed by stirring, thus giving ink compositions of Examples 1 to 56 and Comparative Examples 1 to 17.

### Method for measurement of surface tension

The surface tension of the ink composition was measured at 25°C using a SIGMA 702 surface tensiometer (suspended ring method, KSV Instruments Ltd.). Inkjet recording method in which curing was carried out by UV lamp light source

Inkjet images were printed in bidirectional print mode and Fineart mode using an Acuity Advance UV curing type inkjet printer (FUJIFILM Corporation). Fineart mode is printing carried out in a multipass mode in which the same image area is drawn with 8 passes. The printer was equipped with UV lamp light sources at left and right of the head unit, and in bidirectional print mode the same image area was exposed to UV 16 times during drawing 8 times with the multiple passes.

Images with a halftone density of 100%, 50%, and 20% were printed on OK Topcoat (coated paper, Oji Paper Co., Ltd.) at a resolution of 600 × 450 dpi with a size of 30 cm × 30 cm. The lamp was equipped with SUB ZERO 085 H bulb lamp units manufactured by Integration Technology, and front and rear lamp intensity was set at level 5.

Furthermore, for evaluation of substrate adhesion, an image having a resolution of 600 × 450 dpi, a size of 10 cm × 10 cm, and a halftone density of 100% was printed on each of AVERY PERMANENT 400 (polyvinyl chloride, Avery), REPSOL (acrylic resin, Repsol), LEXAN (polycarbonate, Lexan), High impact Polystyrene (polystyrene, Huntsman), and Correx (polypropylene, Huntsman).

When the exposure area illumination intensity was measured during printing it was found to be 700 mW/cm².

Furthermore, for evaluation of curability and feeling of grain, images having a resolution 600 × 450 dpi, a size of 30 cm × 30 cm, and a halftone density of 100%, 50%, and 20% were printed on OK Top Coat (coated paper, Oji Paper Co., Ltd.) with various exposure surface illumination intensities, that is, 1,000 mW/cm², 500 mW/cm², and 300 mW/cm².

The evaluations explained below were carried out, and the results are given in Table 1 to Table 4.

### Evaluation of surface gloss

An image obtained by the inkjet recording method above was used, and an area of the image having a halftone density of 100% on OK Top Coat (coated paper, Oji Paper Co., Ltd.) was measured at a measurement angle of 60° using a Sheen instruments surface glossmeter. The measurement was carried out 24 hours after printing. When the surface gloss was higher, a good printed material with better appearance was obtained, and when the surface gloss was 10 or less, since the appearance of the image was very faint, this was evaluated as being unacceptable.

### Evaluation of color image density

Color images of cyan, magenta, yellow, and black obtained by the inkjet recording method above were used, and areas of the color images having a halftone density of 100% on OK Top Coat (coated paper, Oji Paper Co., Ltd.) were subjected to reflection color density measurement (D65 light source, viewing angle 2°) using a SPECTROEYE (Gretag). The measurement was carried out 24 hours after printing. When the color density was higher, a good printed material with a higher sharpness color image was obtained, and when the solid color image density was 1.55 or less, since the sharpness was very low, this was evaluated as being unacceptable.

### Evaluation of graininess

images obtained by the inkjet recording method above were used, and images printed under various illumination intensity conditions were visually examined from a position that was 50 cm from the image, and whether or not a feeling of grain was observed was examined.
5: there was no feeling of grain for all printed materials with illumination intensities of 300, 500, 700, and 1,000 mW/cm².
4: there was no feeling of grain for printed materials with illumination intensities of 500, 700, and 1,000 mW/cm², but there was for an image with an illumination intensity of 300 mW/cm².
3: there was no feeling of grain for printed materials with illumination intensities of 700 and 1,000 mW/cm², but there was for images with illumination intensities of 300 and 500 mW/cm².
2: there was no feeling of grain for a printed material with an illumination intensity of 1,000 mW/cm², but there was for images with illumination intensities of 300, 500, and 700 mW/cm².
1: there was a feeling of grain for all printed materials with illumination intensities of 300, 500, 700, and 1,000 mW/cm².

From the viewpoint of the exposure latitude of a printer, a score of 3 or greater was evaluated as being acceptable.

### Evaluation of curability

Images obtained by the inkjet recording method above were used, and images printed under various illumination intensity conditions were examined by touch and evaluated using the criteria below for the degree of tackiness of the images. Examination by touch was carried out immediately after printing.
5: there was no tackiness for all printed materials with illumination intensities of 300, 500, 700, and 1,000 mW/cm².
4: there was no tackiness for printed materials with illumination intensities of 500, 700, and 1,000 mW/cm², but there was tackiness for an image with an illumination intensity of 300 mW/cm².
3: there was no tackiness for printed materials with illumination intensities of 700 and 1,000 mW/cm², but there was tackiness for images with illumination intensities of 300 and 500 mW/cm².
2: there was no tackiness for a printed material with an illumination intensity of 1,000 mW/cm², but there was tackiness for images with illumination intensities of 300, 500, and 700 mW/cm².
1: there was tackiness for all printed materials with illumination intensities of 300, 500, 700, and 1,000 mW/cm².

From the viewpoint of the exposure latitude of a printer, a score of 3 or greater was evaluated as being acceptable.

### Method for evaluation of substrate adhesion: cross-cut and tape peel-off test

A printed material was prepared by the same method as in the description for the inkjet recording method above except that the support was changed to a PET substrate (VERALITE 100, Veralite, thickness 8 mm) or an acrylic substrate (REPSOL GLASS, Repsol, thickness 22 mm).

A cross-cut tape peel-off test was carried out in accordance with ASTM D3359 DIN53 151, and evaluation was carried out using the criteria below. The higher the score, the higher the performance of the printed material, but as a level that can be handled in terms of processing suitability, etc., a level of at least 2 is defined as acceptable.
5: peeled-off area of the image was less than 1%.
4: peeled-off area of the image was at least 1% but less than 5%.
3: peeled-off area of the image was at least 5% but less than 10%.
2: peeled-off area of the image was at least 10% but less than 30%.
1: peeled-off area of the image was at least 30%.

### Evaluation of antiblocking properties

10 sheets having a size of 5 cm × 10 cm were prepared by cutting images obtained by the above-mentioned inkjet image recording method, they were superimposed on each other with printed faces upward, and allowed to stand at 25°C for 24 hours with an iron weight of 2 kg having an area of 5 cm × 10 cm placed thereon. The extent to which samples stuck to each other was evaluated using the criteria below. In practice, since if part of the image is transferred, the printed material loses its value, a rank of at least 3 is defined as an acceptable level.
5: there was no transfer of image at all, and there was no resistance when separating printed faces.
4: there was no transfer of image, but there was slight resistance when separating papers.
3: there was no transfer of image, but there was high resistance when separating papers.
2: only a small part of the image was transferred (image area less than 1%).
1: image was transferred (image area at least 1%).

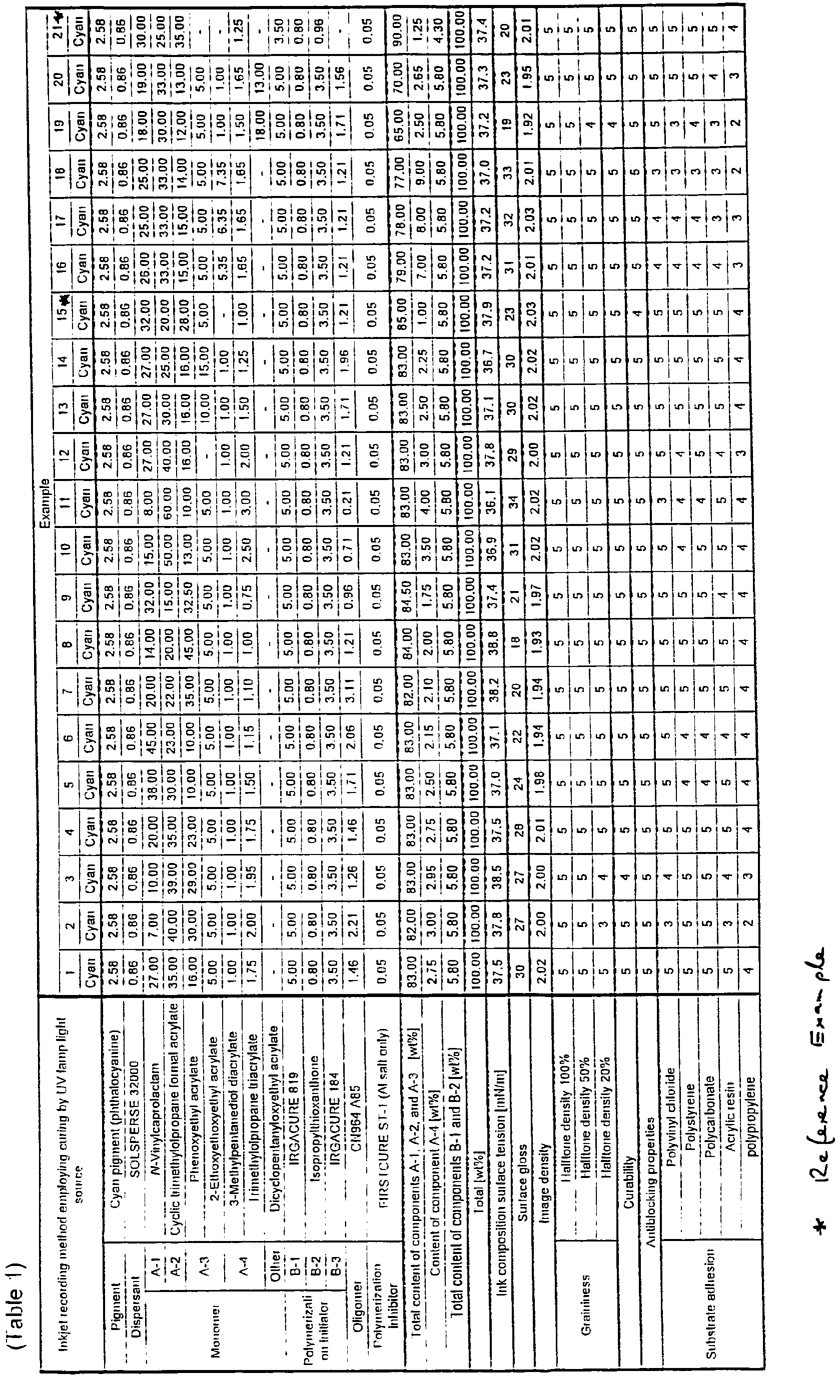

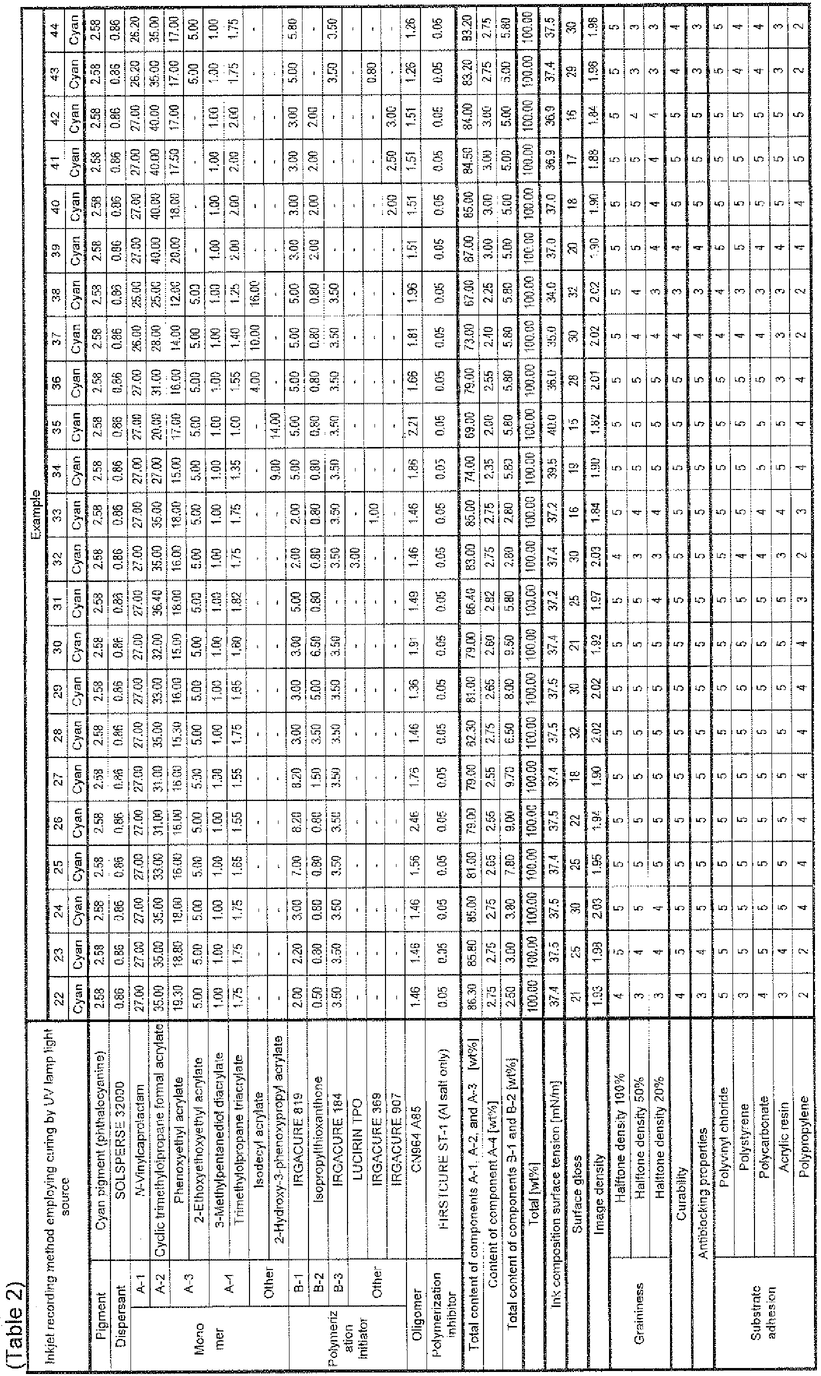

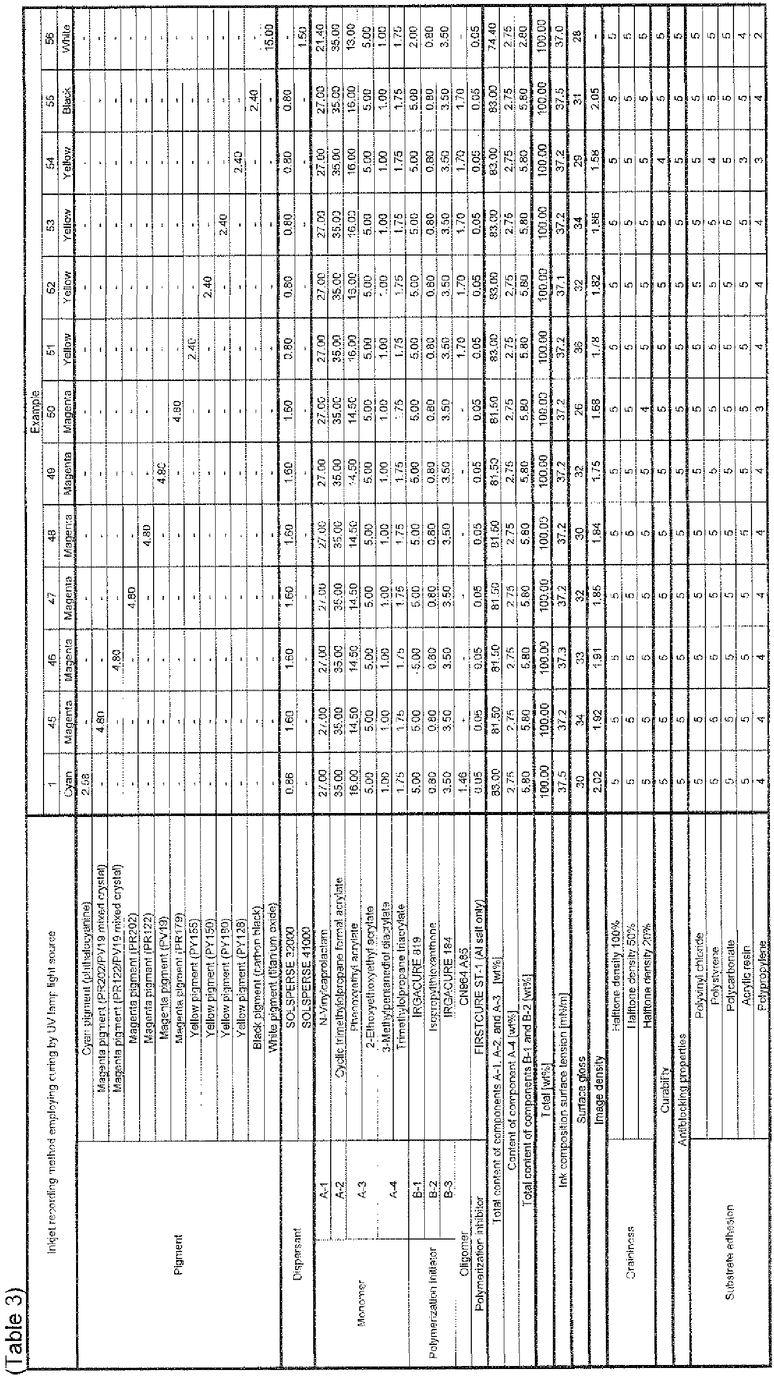

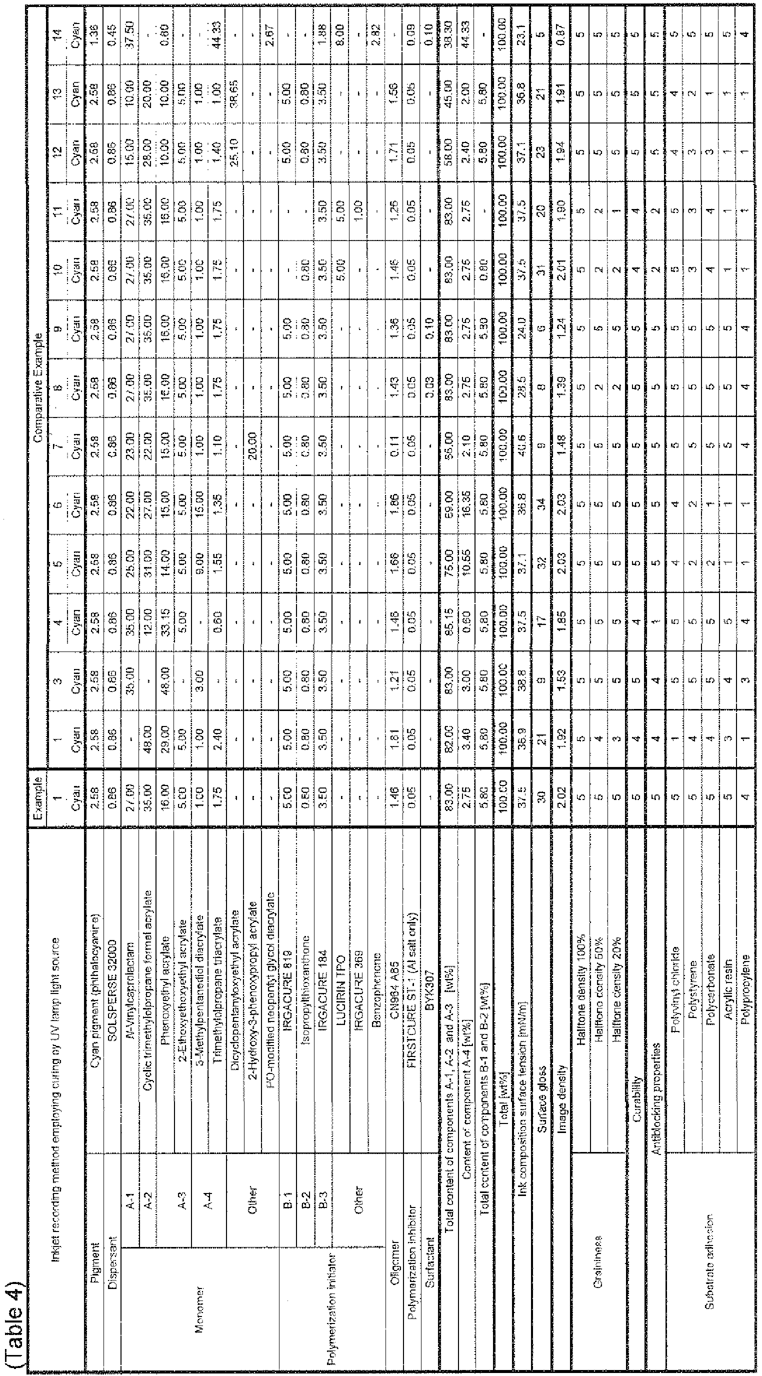

### Inkjet recording method in which curing was carried out using LED light source

Recording on a recording medium was carried out using an experimental inkjet recording system having piezo system inkjet nozzles. The inkjet recording equipment had a total of eight ink supply systems, and each ink supply system independently comprised a main tank, a supply pipe, an ink supply tank immediately before an inkjet head, a filter, and a piezo system inkjet head. The ink tank was charged with the ink composition prepared, and a section from the ink supply tank to the inkjet head was thermally insulated and heated.

The eight piezo system inkjet heads employed a Q-class Sapphire QS-256/10 inkjet head (FUJIFILM DIMATIX, 256 nozzles) and were arranged in parallel and driven simultaneously so as to discharge multisize dots of 10 to 30 pL at a resolution of 600 × 400 dpi, and printing was carried out in a multipass mode in which printing was carried out in both directions by 8 passes. The printer was equipped with UVLED lamp light sources (NC4U134, Nichia Corporation, emission wavelength 385 nm) at left and right of the head unit, and exposure was carried out 0.05 sec. to 0.3 sec. after the ink composition landed on the recording medium. An image was drawn in bidirectional printing mode by 8 multipasses, and in this case the same image area was exposed to UV 16 times.

Images with a halftone density of 100%, 50%, and 20% were printed on OK Top Coat (coated paper, Oji Paper Co., Ltd.) at a resolution of 600 × 400 dpi with a size of 30 cm × 30 cm. The current of the lamp was adjusted so that the exposure surface illumination intensity was set at 700 mW/cm².

Furthermore, for evaluation of substrate adhesion, an image having a resolution of 600 × 400 dpi, a size of 10 cm × 10 cm, and a halftone density of 100% was printed on each of AVERY PERMANENT 400 (polyvinyl chloride, Avery), REPSOL (acrylic resin, Repsol), LEXAN (polycarbonate, Lexan), High Impact Polystyrene (polystyrene, Huntsman), and Correx (polypropylene, Huntsman).

Furthermore, for evaluation of curability and feeling of grain, images having a resolution 600 × 400 dpi, a size of 30 cm × 30 cm, and a halftone density of 100%, 50%, and 20% were printed on OK Top Coat (coated paper, Oji Paper Co., Ltd.) with various exposure surface illumination intensities, that is, 1,000 mW/cm², 500 mW/cm², and 300 mW/cm².

With regard to samples obtained by the inkjet recording method in which curing was carried out using an LED, surface gloss evaluation, image reflection density evaluation, image graininess evaluation, curability evaluation, substrate adhesion evaluation, and antiblocking properties evaluation were carried out below in the same manner as for the above-mentioned samples obtained by the inkjet recording method in which curing was carried out using a UV lamp. The evaluation results are shown in Table 5.

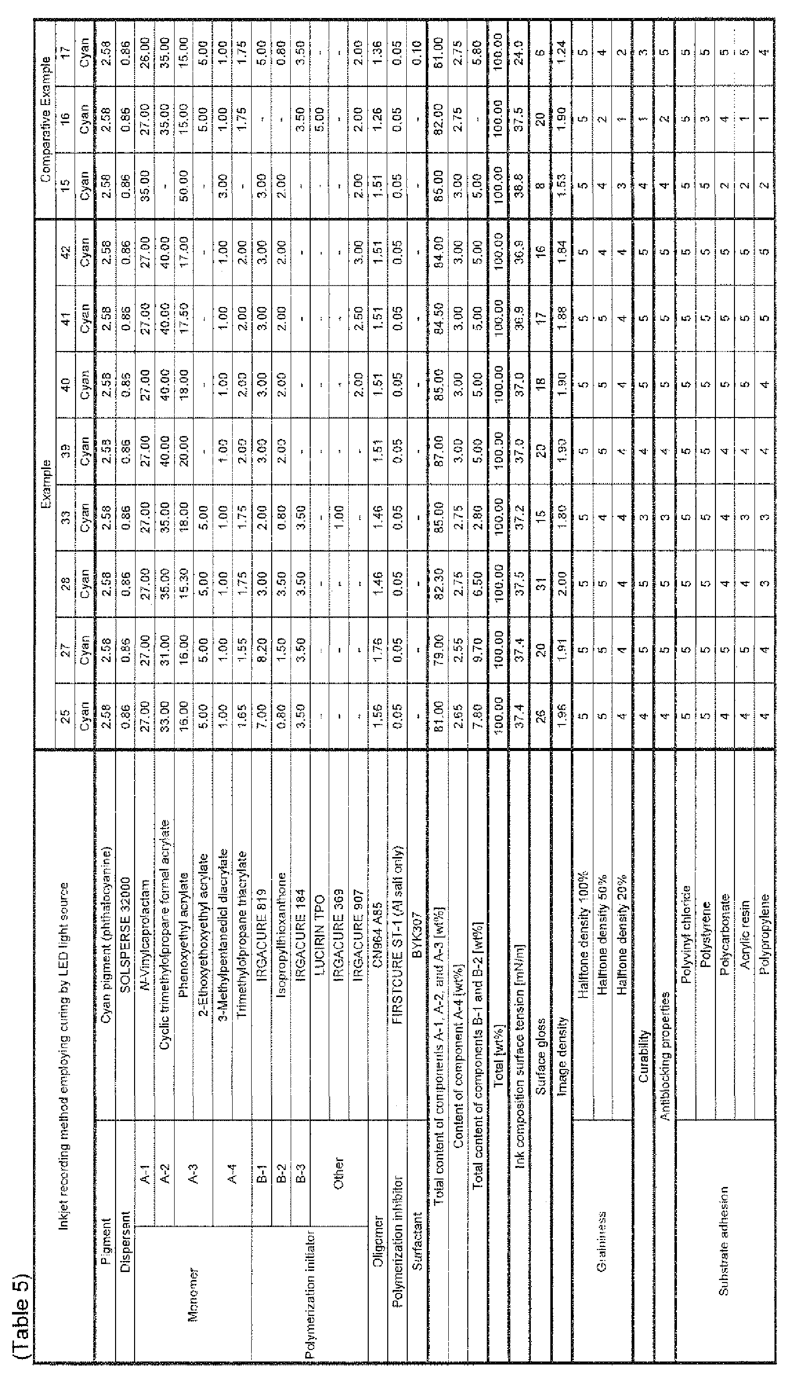

It can be seen from the results of Table 1 to Table 5 that, in accordance with the present invention, an inkjet ink composition that gives high surface gloss, high image density, little feeling of grain for a low density image, which is caused by image aggregation, excellent adhesion to a substrate such as polypropylene, and excellent antiblocking properties can be obtained.

## Claims

1. An inkjet ink composition comprising:
(Component A) a radically polymerizable monomer comprising at least Components A-1 to A-4;
(Component A-1) an N-vinyllactam,
(Component A-2) a compound represented by Formula (1),
(Component A-3) a compound represented by Formula (2), and
(Component A-4) a difunctional (meth)acrylate compound and a trifunctional (meth)acrylate compound; and
as (Component B) a polymerization initiator, (Component B-1) a bisacylphosphine compound
the total content of Components A-1 to A-3 being 65 to 90 wt%,
the content of Component A-4 being 1 to 9 wt%, and
the surface tension at 25°C being 34.0 to 40.0 mN/m, 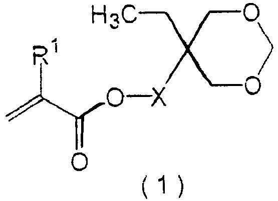 wherein R¹ denotes a hydrogen atom or a methyl group and X denotes a single bond or a divalent linking group having 1 to 60 carbons, 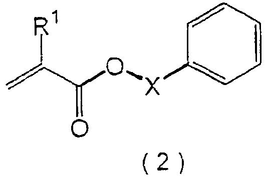 wherein R¹ denotes a hydrogen atom or a methyl group and X denotes a single bond, an alkylene group having 2 to 10 carbons, or a divalent linking group formed by combining one or more alkylene groups having 2 to 10 carbons and one or more bonds selected from the group consisting of an ether bond, an ester bond, a urethane bond, and a urea bond.

2. An inkjet composition according to Claim 1, wherein it does not comprise a silicone-based surfactant or a fluorine-based surfactant, or the total content of these surfactants is less than 0.01 wt% relative to the total weight of the inkjet ink composition.

3. An inkjet ink composition according to Claim 1 or Claim 2, wherein the difunctional (meth)acrylate compound is an optionally branched hydrocarbon chain having 5 or more carbons.

4. An inkjet ink composition according to any preceding Claim, wherein it comprises as Component A-3 a radically polymerizable monomer represented by Formula (2) and a radically polymerizable monomer represented by the following Formula (3): 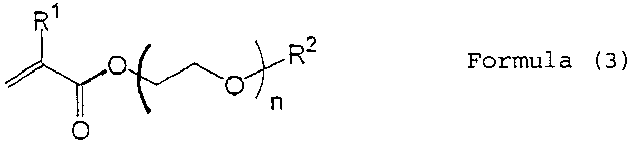 wherein R¹ denotes a hydrogen atom or a methyl group, R² denotes an alkyl group having 2 to 4 carbons, and n denotes an integer of 1 to 3.

5. An inkjet ink composition according to any preceding Claim, wherein the polymerization initiator (Component B) further comprises a thioxanthone compound (Component B-2).

6. An inkjet ink composition according to Claim 5, wherein the total content of the Component B-1 and the Component B-2 is 2.5 to 10 wt% relative to the total weight of the inkjet ink composition.

7. An inkjet ink composition according to any preceding Claim, wherein Component A-1 is N-vinylcaprolactam and Component A-2 is cyclic trimethylolpropane formal acrylate.

8. An inkjet ink composition according to any preceding Claim, wherein Component A-3 is phenoxyethyl acrylate and 2-ethoxyethoxyethyl acrylate and Component A-4 is 3-methylpentanediol diacrylate and trimethylolpropane triacrylate.

9. An inkjet ink composition according to any preceding Claim, which has a surface tension in the range of 36.0 to 39.5 mN/m.

10. An inkjet ink composition according to any preceding Claim, wherein the difunctional (meth)acrylate compound is neopentyl glycol di(meth)acrylate, propylene oxide-modified neopentyl glycol di(meth)acrylate, hexanediol di(meth)acrylate, propylene oxide-modified hexanediol di(meth)acrylate, nonanediol di(meth)acrylate, decanediol di(meth)acrylate, dodecanediol di(meth)acrylate, tridecanediol di(meth)acrylate, octadecanediol di(meth)acrylate, 3-methyl-1,5-pentanediol di(meth)acrylate, 2-n-butyl-2-ethyl-1,3-propanediol di(meth)acrylate, cyclohexanedimethanol di(meth)acrylate or cyclohexane di(meth)acrylate.

11. An inkjet ink composition according to any preceding Claim, wherein the trifunctional (meth)acrylate compound is pentaerythritol tri(meth)acrylate, trimethylolethane tri(meth)acrylate or trimethylolpropane tri(meth)acrylate.

12. An ink set comprising:
at least a cyan ink composition, a magenta ink composition, a yellow ink composition, and a black ink composition, at least one of the cyan ink composition, the magenta ink composition, the yellow ink composition, and the black ink composition being the inkjet ink composition according to any one of Claims 1 to 11, the cyan ink composition comprising a phthalocyanine pigment, the magenta ink composition comprising C.I. Pigment Violet 19, C.I. Pigment Violet 122, or a mixed crystal pigment of C.I. Pigment Violet 19, the yellow ink composition comprising C.I. Pigment Yellow 150, C.I. Pigment Yellow 155, or C.I. Pigment Yellow 180, and the black ink composition comprising a carbon black pigment.

13. An ink set according to Claim 12, wherein the magenta ink composition comprises a mixed crystal pigment of C.I. Pigment Violet 19 and the yellow ink composition comprises C.I. Pigment Yellow 150, C.I. Pigment Yellow 155, or C.I. Pigment Yellow 180.

14. An inkjet recording method comprising the steps of:
discharging the inkjet ink composition according to any one of Claims 1 to 11 onto a recording medium; and
curing the inkjet ink composition by irradiating the discharged inkjet ink composition with actinic radiation.

15. A printed material formed using the inkjet recording method according to Claim 14.

## Patentansprüche

1. Tintenstrahl-Tintenzusammensetzung, umfassend:
(Komponente A) ein radikalisch-polymerisierbares Monomer, umfassend zumindest die Komponenten A-1 bis A-4;
(Komponente A-1) ein N-Vinyllactam,
(Komponente A-2) eine Verbindung der Formel (1),
(Komponente A-3) eine Verbindung der Formel (2), und
(Komponente A-4)eine difunktionelle (Meth)acrylat-Verbindung und eine trifunktionelle (Meth)acrylat-Verbindung; und
als (Komponente B) einen Polymerisationsinitiator, (Komponente B-1) eine Bisacylphosphin-Verbindung,
wobei der Gesamtgehalt der Komponenten A-1 bis A-3 65 bis 90 Gew.% beträgt, der Gehalt der Komponente A-4 1 bis 9 Gew.% beträgt und die Oberflächenspannung bei 25°C 34,0 bis 40,0 mN/m beträgt, 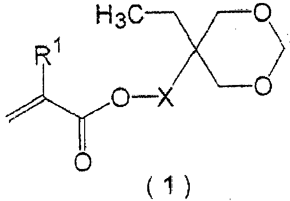 worin R¹ ein Wasserstoffatom oder eine Methylgruppe bezeichnet und X eine Einfachbindung oder eine divalente Verknüpfungsgruppe mit 1 bis 60 Kohlenstoffen bezeichnet, 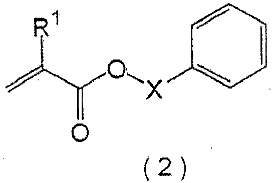 worin R¹ ein Wasserstoffatom oder eine Methylgruppe bezeichnet und X eine Einfachbindung, eine Alkylengruppe mit 2 bis 10 Kohlenstoffen oder eine divalente Verknüpfungsgruppe, die durch Kombinieren einer oder mehrer Alkylengruppe(n) mit 2 bis 10 Kohlenstoffen und einer oder mehreren Bindung(en), ausgewählt aus der Gruppe bestehend aus einer Etherbindung, einer Esterbindung, einer Urethanbindung und einer Harnstoffbindung, gebildet ist, bezeichnet.

2. Tintenstrahlzusammensetzung gemäss Anspruch 1, die kein Silicon-basiertes Tensid oder Fluor-basiertes Tensid umfasst oder worin der Gesamtgehalt dieser Tenside weniger als 0,01 Gew.%, bezogen auf das Gesamtgewicht der Tintenstrahl-Tintenzusammensetzung, beträgt.

3. Tintenstrahl-Tintenzusammensetzung gemäss Anspruch 1 oder Anspruch 2, wobei die difunktionelle (Meth)acrylat-Verbindung eine gegebenenfalls verzweigte Kohlenwasserstoffkette mit 5 oder mehr Kohlenstoffen ist.

4. Tintenstrahl-Tintenzusammensetzung gemäss einem der vorhergehenden Ansprüche, wobei diese als Komponente A-3 ein radikalisch-polymerisierbares Monomer der Formel (2) und ein radikalisch-polymerisierbares Monomer der nachstehenden Formel (3) umfasst: 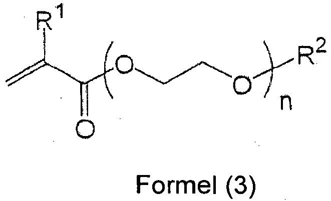 worin R¹ ein Wasserstoffatom oder eine Methylgruppe bezeichnet, R² eine Alkylgruppe mit 2 bis 4 Kohlenstoffen bezeichnet und n eine ganze Zahl von 1 bis 3 bezeichnet.

5. Tintenstrahl-Tintenzusammensetzung gemäss einem der vorhergehenden Ansprüche, wobei der Polymerisationsinitiator (Komponente B) ferner eine Thioxanthon-Verbindung (Komponente B-2) umfasst.

6. Tintenstrahl-Tintenzusammensetzung gemäss Anspruch 5, wobei der Gesamtgehalt der Komponente B-1 und der Komponente B-2 2,5 bis 10 Gew.%, bezogen auf das Gesamtgewicht der Tintenstrahl-Tintenzusammensetzung, beträgt.

7. Tintenstrahl-Tintenzusammensetzung gemäss einem der vorhergehenden Ansprüche, wobei die Komponente A-1 N-Vinylcaprolactam ist und die Komponente A-2 cyclisches Trimethylolpropanformalacrylat ist.

8. Tintenstrahl-Tintenzusammensetzung gemäss einem der vorhergehenden Ansprüche, wobei die Komponente A-3 Phenoxyethylacrylat und 2-Ethoxyethoxyethylacrylat ist und die Komponente A-4 3-Methylpentandioldiacrylat und Trimethylolpropantriacrylat ist.

9. Tintenstrahl-Tintenzusammensetzung gemäss einem der vorhergehenden Ansprüche, die eine Oberflächenspannung im Bereich von 36,0 bis 39,5 mN/m aufweist.

10. Tintenstrahl-Tintenzusammensetzung gemäss einem der vorhergehenden Ansprüche, wobei die difunktionelle (Meth)acrylat-Verbindung Neopentylglykoldi(meth)acrylat, Propylenoxid-modifiziertes Neopentylglykol-di(meth)acrylat, Hexandioldi(meth)acrylat, Propylenoxid-modifiziertes Hexandioldi(meth)acrylat, Nonandioldi(meth)acrylat, Decandioldi(meth)acrylat, Dodecandioldi(meth)acrylat, Tridecandioldi(meth)acrylat, Octadecandioldi(meth)acrylat, 3-Methyl-1,5-pentandioldi(meth)acrylat, 2-n-Butyl-2-ethyl-1,3-propandioldi(meth)acrylat, Cyclohexandimethanol-di(meth)acrylat oder Cyclohexandi(meth)acrylat ist.

11. Tintenstrahl-Tintenzusammensetzung gemäss einem der vorhergehenden Ansprüche, wobei die trifunktionelle (Meth)acrylat-Verbindung Pentaerythritoltri(meth)-acrylat, Trimethylolethantri(meth)acrylat oder Trimethylolpropantri(meth)acrylat ist.

12. Tintenset, umfassend:
zumindest eine cyanfarbene Tintenzusammensetzung, eine magentafarbene Tintenzusammensetzung, eine gelbe Tintenzusammensetzung und eine schwarze Tintenzusammensetzung, wobei zumindest eine der cyanfarbenen Tintenzusammensetzung, der magentafarbenen Tintenzusammensetzung, der gelben Tintenzusammensetzung und der schwarzen Tintenzusammensetzung eine Tintenstrahl-Tintenzusammensetzung gemäss einem der Ansprüche 1 bis 11 ist, die cyanfarbene Tintenzusammensetzung ein Phthalocyaninpigment umfasst, die magentafarbene Tintenzusammensetzung C.I. Pigment Violet 19, C.I. Pigment Violet 122 oder ein Mischkristallpigment von C.I. Pigment Violet 19 umfasst, die gelbe Tintenzusammensetzung C.I. Pigment Yellow 150, C.I. Pigment Yellow 155 oder C.I. Pigment Yellow 180 umfasst und die schwarze Tintenzusammensetzung ein Russpigment umfasst.

13. Tintenset gemäss Anspruch 12, wobei die magentafarbene Tintenzusammensetzung ein Mischkristallpigment von C.I. Pigment Violet 19 umfasst und die gelbe Tintenzusammensetzung C.I. Pigment Yellow 150, C.I. Pigment Yellow 155 oder C.I. Pigment Yellow 180 umfasst.

14. Tintenstrahl-Aufzeichnungsverfahren, umfassend die Schritte:
Ausstossen der Tintenstrahl-Tintenzusammensetzung gemäss einem der Ansprüche 1 bis 11 auf ein
Aufzeichnungsmedium; und
Härten der Tintenstrahl-Tintenzusammensetzung durch Bestrahlen der ausgestossenen Tintenstrahl-Tintenzusammensetzung mit aktinischer Strahlung.

15. Drucksache, die unter Verwendung des Tintenstrahl-Aufzeichnungsverfahren gemäss Anspruch 14 gebildet ist.

## Revendications

1. Composition d'encre pour jet d'encre comprenant :
(composant A) un monomère pouvant être soumis à une polymérisation radicalaire comprenant au moins des composants A-1 à A-4;
(composant A-1) un N-vinyllactame,
(composant A-2) un composé représenté par la formule (1),
(composant A-3) un composé représenté par la formule (2),
et
(composant A-4) un composé de (méth)acrylate difonctionnel et un composé de (méth)acrylate trifonctionnel ; et
comme (composant B) un initiateur de polymérisation, (composant B-1) un composé de bisacylphosphine
la teneur totale en composants A-1 à A-3 étant de 65 à 90 % en poids,
la teneur en composant A-4 étant de 1 à 9 % en poids, et
la tension de surface à 25 °C étant de 34 à 40 mN/m, 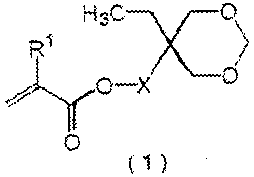 dans laquelle R¹ représente un atome d'hydrogène ou un groupe méthyle et X représente une liaison simple ou un groupe de liaison divalent ayant 1 à 60 atomes de carbone, 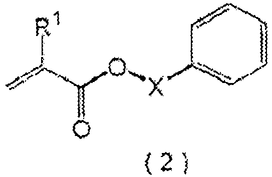 dans laquelle R¹ représente un atome d'hydrogène ou un groupe méthyle et X représente une liaison simple, un groupe alkylène ayant 2 à 10 atomes de carbone, ou un groupe de liaison divalent formé par une combinaison d'un ou plusieurs groupes alkylène ayant 2 à 10 atomes de carbone et une ou plusieurs liaisons sélectionnées dans le groupe consistant en une liaison éther, une liaison ester, une liaison uréthane, et une liaison urée.

2. Composition pour jet d'encre selon la revendication 1, qui ne comprend pas de tensioactif à base de silicone ou de tensioactif à base de fluor, ou la teneur totale de ces tensioactifs est inférieure à 0,01 % en poids par rapport au poids total de la composition d'encre pour jet d'encre.

3. Composition d'encre pour jet d'encre selon la revendication 1 ou la revendication 2, dans laquelle le composé de (méth)acrylate difonctionnel est une chaîne hydrocarbure éventuellement ramifiée ayant 5 atomes de carbone ou plus.

4. Composition d'encre pour jet d'encre selon l'une quelconque des revendications précédentes, qui comprend comme composant A-3 un monomère pouvant être soumis à une polymérisation radicalaire représenté par la formule (2) et un monomère pouvant être soumis à une polymérisation radicalaire représenté par la formule (3) suivante : 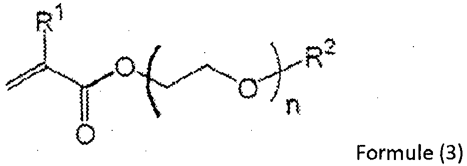 dans laquelle R¹ représente un atome d'hydrogène ou un groupe méthyle, R² représente un groupe alkyle ayant 2 à 4 atomes de carbone, et n représente un nombre entier de 1 à 3.

5. Composition d'encre pour jet d'encre selon l'une quelconque des revendications précédentes, dans laquelle l'initiateur de polymérisation (composant B) comprend en outre un composé de thioxanthone (composant B-2).

6. Composition d'encre pour jet d'encre selon la revendications 5, dans laquelle la teneur totale du composant B-1 et du composant B-2 est de 2,5 à 10 % en poids par rapport au poids total de la composition d'encre pour jet d'encre.

7. Composition d'encre pour jet d'encre selon l'une quelconque des revendications précédentes, dans laquelle la composant A-1 est le N-vinylcaprolactame et le composant A-2 est le triméthylolpropane formal-acrylate cyclique.

8. Composition d'encre pour jet d'encre selon l'une quelconque des revendications précédentes, dans laquelle le composant A-3 est le phénoxyéthylacrylate et le 2-éthoxyéthoxyéthylacrylate, et le composant A-4 est le 3-méthylpentanediol diacrylate et le triméthylolpropane triacrylate.

9. Composition d'encre pour jet d'encre selon l'une quelconque des revendications précédentes, qui a une tension de surface dans la plage de 36 à 39,5 mN/m.

10. Composition d'encre pour jet d'encre selon l'une quelconque des revendications précédentes, dans laquelle le composé de (méth)acrylate difonctionnel est le néopentylglycol di(méth)acrylate, le néopentylglycol di(méth)acrylate modifié par l'oxyde de propylène, l'hexanediol di(méth)acrylate, l'hexanediol di(méth)acrylate modifié par l'oxyde de propylène, le nonanediol di(méth)acrylate, le décanediol di(méth)acrylate, le dodécanediol di(méth)acrylate, le tridécanediol di(méth)acrylate, l'octadécanediol di(méth)acrylate, le 3-méthyl-1,5-pentanediol di(méth)acrylate, le 2-n-butyl-2-éthyl-1,3-propanediol di(méth)acrylate, le cyclohexanediméthanol di(méth)acrylate ou le cyclohexane di(méth)acrylate.

11. Composition d'encre pour jet d'encre selon l'une quelconque des revendications précédentes, dans laquelle le composé de (méth)acrylate trifonctionnel est le pentaérythritol tri(méth)acrylate, le triméthyloléthane tri(méth)acrylate ou le triméthylopropane tri(méth)acrylate.

12. Assortiment d'encres comprenant :
au moins une composition d'encre cyan, une composition d'encre magenta, une composition d'encre jaune, et une composition d'encre noire, au moins l'une de la composition d'encre cyan, de la composition d'encre magenta, de la composition d'encre jaune, et de la composition d'encre noire étant la composition d'encre pour jet d'encre selon l'une quelconque des revendications 1 à 11, la composition d'encre cyan comprenant un pigment phtalocyanine, la composition d'encre magenta comprenant un pigment C.I. Violet 19, un pigment C.I. Violet 122, ou un pigment de cristal mixte de pigment C.I. Violet 19, la composition d'encre jaune comprenant un pigment C.I. Yellow 150, un pigment C.I. Yellow 155, ou un pigment C.I. Yellow 180, et la composition d'encre noire comprenant un pigment de noir de carbone.

13. Assortiment d'encres selon la revendication 12, dans lequel la composition d'encre magenta comprend un pigment de cristal mixte du pigment C.I. Violet 19 et la composition d'encre jaune comprend un pigment CI. Yellow 150, un pigment C.I. Yellow 155, ou un pigment C.I. Yellow 180.

14. Procédé d'enregistrement à jet d'encre comprenant les étapes de :
décharge de la composition d'encre pour jet d'encre selon l'une quelconque des revendications 1 à 11 sur un support d'enregistrement; et
durcissement de la composition d'encre pour jet d'encre par irradiation de la composition d'encre pour jet d'encre déchargée avec un rayonnent actinique.

15. Matériau imprimé formé en utilisant le procédé d'enregistrement à jet d'encre selon la revendication 14.
